# FASCICULE DE BREVET EUROPEEN

(11) **EP 4 352 693 B1**
(45) Date de publication et mention de la délivrance du brevet: **21.10.2026**
(21) Numéro de dépôt: 22734221.9
(22) Date de dépôt: 02.06.2022
(51) Int. Cl.: G06T 7/593

(54) **PROCÉDÉ DE RECONSTRUCTION D'UN MODÈLE 3D D'UN TOIT D'UN BÂTIMENT PAR ANALYSE D'IMAGES ACQUISES PAR TÉLÉDÉTECTION**
VERFAHREN ZUR REKONSTRUKTION EINES 3D-MODELLS EINES GEBÄUDEDACHS DURCH ANALYSE VON DURCH FERNERFASSUNG ERFASSTEN BILDERN
METHOD FOR RECONSTRUCTING A 3D MODEL OF A BUILDING ROOF BY ANALYZING IMAGES ACQUIRED BY REMOTE SENSING

(30) Priorité: 07.06.2021 FR 2105981
(43) Date de publication de la demande: 17.04.2024
(73) Titulaire: Luxcarta Technology, 06370 Mouans Sartoux (FR)
(72) Inventeur: TRIPODI, Sébastien, 06600 ANTIBES (FR); TARABALKA, Yuliya, 06410 BIOT (FR); BAUCHET, Jean-Philippe, 06600 ANTIBES (FR); TRASTOUR, Frédéric, 06140 COURSEGOULES (FR); POUJADE, Véronique, 06580 PEGOMAS (FR); MAPURISA, Willard, 0081 PRETORIA (ZA); LAURORE, Lionel, 06250 MOUGINS (FR); HYLAND, Justin, 7803 CAPE TOWN (ZA)
(74) Mandataire: Hautier IP
(86) Numéro de dépôt international: PCT/EP2022/065110
(87) Numéro de publication internationale: WO 2022/258492

(56) Documents cités:
- US-A1- 2010 114 537
- BERTAN E ET AL: "Automatic 3D Roof Reconstruction using Digital Cadastral Map, Architectural Knowledge and an Aerial Image", GEOSCIENCE AND REMOTE SENSING SYMPOSIUM, 2006. IGARSS 2006. IEEE INTER NATIONAL CONFERENCE ON, IEEE, PI, 1 July 2006 (2006-07-01), pages 1415 - 1418, XP031179243, ISBN: 978-0-7803-9510-7, DOI: 10.1109/IGARSS.2006.365
- "RADIUS: Image Understanding for Imagery Intelligence", 1 January 1996, article ROBERT T. COLLINS ET AL: "The UMass Ascender System for 3D Site Model Construction", pages: 209 - 222, XP055610711

## Description

### DOMAINE TECHNIQUE DE L'INVENTION

La présente invention concerne le domaine de la reconstruction en LOD2 de modèles de bâtiments en trois dimensions (3D) par analyse d'images acquises par télédétection, par exemple par satellite(s). Les applications d'une telle reconstruction en LOD2 de modèles de bâtiments en 3D concernent notamment les services de téléphonie mobile, la défense nationale, les simulateurs de vol(s), les constructeurs de bâtiments, les professionnels de l'entretien des toits et les assureurs immobiliers.

### ETAT DE LA TECHNIQUE

S'il est possible de reconstruire « à la main » en LOD2 des modèles de bâtiments en 3D à partir d'images acquises par télédétection, cette approche est fastidieuse. C'est pourquoi des techniques ont été développées pour reconstruire des modèles de bâtiments en 3D de façon plus ou moins automatisée.

Pour mener à bien ces développements, plusieurs difficultés sont à surmonter.

En effet, il est notamment nécessaire de procéder à l'extraction de l'information sémantique comprise dans les images acquises par télédétection. Plus particulièrement, cette étape consiste à assigner, à chaque pixel de chaque image, une classe à laquelle il appartient. Ainsi, chaque pixel pourra être classé comme appartenant à un bâtiment, un arbre, un terrain, etc. Cette étape n'est pas triviale. Elle a pour principale contrainte de nécessiter une méthode générique pour gérer : le type d'urbain (résidentiel, centre-ville, industriel,...), les conditions d'acquisition des images (le type de capteur, la luminosité, ...), etc.

Une autre difficulté est liée à la conversion de l'information sémantique. Cette étape consiste par exemple à convertir l'ensemble des pixels de l'image classés comme appartenant à un bâtiment vers un ensemble de vertex et d'arrêtes. Cette étape n'est pas non plus triviale. Elle a pour principale contrainte la problématique de la simplification et/ou de la régularisation de l'information sémantique depuis chaque image. Cette problématique reste à ce jour un problème ouvert dans le contexte de l'extraction de l'information sémantique de bâtiments.

En outre, la conversion d'une coordonnée Image vers une coordonnée Monde n'est pas non plus triviale. En effet, l'information de l'élévation nécessaire à cette conversion doit être précise, voire très précise, en particulier dans le cadre de la reconstruction des bâtiments 3D en LOD2. Cette information d'élévation doit être fournie pour chaque vertex qui compose le toit du bâtiment à modéliser, ce qui est particulièrement difficile notamment lorsque la conversion est réalisée à partir d'images prises par satellite.

Cette troisième difficulté apparaît lorsqu'il est souhaité une reconstruction allant au-delà d'une modélisation des bâtiments connue sous l'acronyme LOD1 (LOD pour « level of detail » selon la terminologie anglo-saxonne ou, en français, « niveau de détail ») qui consiste en une modélisation des bâtiments sous forme de boîtes parallélépipédiques ; or l'objectif poursuivi ici est d'atteindre le niveau de détail LOD2, ce niveau de détails comprenant, en plus du niveau de détail LOD1, une modélisation de la forme des toits (sans détails comme lucarnes, cheminées, antennes, panneaux solaires, ...) des bâtiments, avec éventuellement une projection verticale jusqu'au sol. Il est par exemple connu du document de brevet US2019220711 (A1) un système pour la reconstruction d'une structure 3D en coordonnées Monde à partir d'une paire d'images stéréoscopiques. Ce système repose sur la détermination, à partir de ladite paire d'images, d'une carte de disparité. Cette dernière est utilisée, conjointement aux informations colorimétriques des images, comme entrée d'un algorithme de segmentation « split-and-merge » pour générer un nuage de points sur la base duquel un modèle en 3D d'un toit de bâtiment est finalement reconstruit. Ce système repose donc pour l'essentiel sur une carte de disparité ; or la qualité d'une telle carte dépend fortement de la qualité des images stéréoscopiques considérées. Plus particulièrement, une haute résolution d'images est nécessaire pour un résultat restant à ce jour potentiellement insatisfaisant, et nécessitant, au moins de ce fait, l'intervention d'un opérateur pour apporter au modèle reconstruit les corrections nécessaires à son exploitation. En outre, l'approche proposée nécessite la génération d'au moins un nuage de points, et implique donc le traitement numérique de quantités de données importantes.

Il est encore connu, du document de brevet US2019385363 (A1), un procédé de modélisation de toits de bâtiments en 3D à partir d'une ou plusieurs images 2D. Ce système prévoit d'extraire de nombreuses informations sémantiques depuis une ou plusieurs images de toits de bâtiments. Néanmoins, et comme indiqué plus haut, une telle extraction n'est pas triviale, et certaines des informations extraites ne peuvent l'être de façon suffisamment viable, pour être effectivement exploitables, que si les images sont d'une grande qualité. Aussi, et notamment lorsque lesdites images sont prises par satellite(s), certaines des informations sémantiques extraites et utilisées selon le document de brevet US2019385363 (A1), telles que les informations relatives à la pente des différents pans de toit, ne peuvent pas l'être de façon suffisamment fiable pour ne pas nécessiter la mise en œuvre de protocoles assez lourds de vérifications/corrections des résultats obtenus pour permettre leur exploitation. Par ailleurs, le procédé de modélisation selon le document de brevet US2019385363 (A1) exigeant effectivement de considérer des images de haute qualité, généralement prises par LIDAR, par drone ou par avion, amènent à identifier différentes lignes de toit non pertinentes pour les besoins d'une reconstruction en LOD2 ; d'où, là encore, la nécessité de mettre en œuvre des protocoles de post-traitement assez lourds.

Par ailleurs, le brevet US 2010/114537 A1 (PERSHING CHRIS [US]) (2010-05-06) divulgue un système d'estimation de toit comprenant un moteur d'acquisition d'images, un moteur de modélisation de toit et un moteur de génération de rapport, le système étant couplé en communication à une source d'images. La génération d'un tel modèle est basée sur une corrélation entre au moins deux des images aériennes du bâtiment. Elle est basée en outre sur une indication d'une caractéristique correspondante, par exemple, un sommet du toit du bâtiment, le coin d'un des pans du toit, un point d'un pignon ou d'une croupe du toit, etc. ou un élément linéaire, tel qu'une ligne de crête ou de vallée entre deux plans de toit.

L'article intitulé "Automatic 3D Roof Reconstruction using Digital Cadastral Map, Architectural Knowledge and an Aerial Image", de BERTAN E ET AL: publié dans GEOSCIENCE AND REMOTE SENSING SYMPOSIUM, 2006. IGARSS 2006. IEEE INTER NATIONAL CONFERENCE ON, IEEE, (2006-07-01), pages 1415-1418, divulgue une méthode de reconstruction d'un modèle de toit en trois dimensions qui n'utilise qu'une seule et unique vue aérienne, en combinant cette vue unique avec une connaissance architecturale des bâtiments concernés. La méthode consiste à fournir tout d'abord une ortho photo, puis à utiliser les données cadastrales de sorte à identifier le contour du toit sur la base de l'empreinte cadastrale du bâtiment. Une fois le contour ainsi défini, les pixels situés à l'intérieur de ce contour sont identifiés comme tels, pour former une image du toit. Un modèle de toit en deux dimensions est ensuite formé par identification d'un axe de symétrie et regroupement par catégories des jonctions entre segments identifiés, puis par combinaison entre elles des informations que constituent l'empreinte cadastrale du bâtiment, les segments formant des intersections et l'axe de symétrie identifié. Enfin, un modèle tridimensionnel est formé, à partir du modèle bidimensionnel.

L'article intitulé "The UMass Ascender System for 3D Site Model Construction" de Robert T. Collins ET AL: publié dans : "RADIUS: Image Understanding for Imagery Intelligence", (1996-01-01), XP055610711, pages 209-222, divulgue une méthode de reconstruction en trois dimensions de bâtiment depuis une pluralité de vues se recoupant les unes les autres. Le traitement est divisé en cinq étapes. La première étape consiste en une extraction de segments de ligne. La deuxième étape du traitement consiste en une détection de polygones représentant les toits de bâtiments. La troisième étape du traitement consiste en une mise en correspondance épipolaire des polygones entre images. Elle permet de déterminer la hauteur de chaque polygone précédemment extrait. La quatrième étape consiste en une triangulation de ligne entre images et permet de remonter à la taille, la forme et la position d'un bâtiment dans un système de coordonnées tridimensionnelles local. La cinquième étape consiste à reprojeter le résultat de la quatrième étape sur les vues de départ par cartographie d'intensité.

Un objet de la présente invention est donc de proposer un procédé de reconstruction d'un modèle tridimensionnel d'au moins une partie d'un toit d'un bâtiment par analyse d'images acquises par télédétection qui permette de pallier au moins un inconvénient de l'état de la technique.

Plus particulièrement, un objet de la présente invention est de proposer un tel procédé qui soit entièrement automatisé, et ne nécessite pas obligatoirement l'intervention d'un opérateur pour en corriger le résultat.

Un autre objet de la présente invention est de proposer un tel procédé qui nécessite moins de ressources informatiques que ce soit en termes de capacité de traitement ou de capacité de stockage de données numériques.

Un autre objet de la présente invention est de proposer un tel procédé qui ne nécessite pas obligatoirement des images de haute qualité, mais est au contraire opérationnel en considérant des images de qualité standard, telles que celles qu'offrent aujourd'hui les revendeurs d'images satellites, l'usage d'images de haute qualité n'étant évidemment pas exclu.

Un autre objet de la présente invention est de proposer un tel procédé qui permette d'obtenir, de préférence de façon entièrement automatisée, une modélisation des toits en LOD2 qui soit directement exploitable, et qui plus particulièrement ne nécessite pas de mettre en œuvre des protocoles assez lourds de vérifications/corrections.

Les autres objets, caractéristiques et avantages de la présente invention apparaîtront à l'examen de la description suivante et des dessins d'accompagnement. Il est entendu que d'autres avantages peuvent être incorporés.

### RESUME DE L'INVENTION

Pour atteindre au moins l'un des objectifs susmentionnés, selon un premier aspect de l'invention, on prévoit un procédé de reconstruction d'un modèle tridimensionnel d'un toit d'au moins un bâtiment par analyse d'images acquises par télédétection, le procédé comprenant les étapes de la revendication 1.

Le procédé selon le premier aspect de l'invention constitue ainsi une chaine de traitement automatique et robuste pour la reconstruction de modèle de bâtiments en 3D depuis l'analyse d'images acquises par télédétection, par exemple par satellite(s). Comprenant la vectorisation du contour et des éventuelles arêtes du toit d'au moins un, voire de chaque, bâtiment photographié, il permet de fournir un résultat conforme à la norme LOD2 :
- en nécessitant des capacités numériques de traitement et de stockage moindres que les solutions de l'état de la technique, en particulier lorsque celles-ci ont recours à un nuage de points, ou
- sans reposer sur l'extraction, depuis les images, d'une pluralité d'informations sémantiques dont la fiabilité dépend fortement de la qualité des images.

Chaque étape du procédé peut être mise en œuvre par ordinateur.

Un autre aspect concerne un produit programme d'ordinateur comprenant des instructions, qui lorsqu'elles sont effectuées par au moins un processeur, exécute les étapes du procédé selon le premier aspect de l'invention.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un ordinogramme de différentes étapes d'un mode de réalisation du procédé selon le premier aspect de l'invention.
La figure 2 représente une paire d'images stéréoscopiques d'une même zone géographique.
La figure 3 représente une photographie de la zone géographique représentée sur la figure 2, sur laquelle apparaissent les modèles tridimensionnels des bâtiments photographiés, tels que reconstruits par implémentation du procédé selon le premier aspect de l'invention.
La figure 4 représente schématiquement un Modèle Numérique de Terrain (ligne en tirets) et un Modèle Numérique de Surface (ligne en trait plein).
Les figures 5A à 5C représentent le résultat de l'étape de détection, sur une première image stéréoscopique de la paire, des pixels représentatifs du contour de chaque toit photographié (figure 5B) et le résultat de l'étape de détection, sur la première image stéréoscopique de la paire, des pixels représentatifs des arêtes de chaque toit photographié (figure 5C).
Les figures 6A à 6C représentent le résultat de l'étape de détection, sur une seconde image stéréoscopique de la paire, des pixels représentatifs du contour de chaque toit photographié (figure 6B) et le résultat de l'étape de détection, sur la seconde image télescopique de la paire, des pixels représentatifs des arêtes de chaque toit photographié (figure 6C).
La figure 7A est un agrandissement d'une zone A de la figure 5B qui est encadrée par des tirets, pour mieux illustrer le résultat de l'étape de détection, sur la première image stéréoscopique de la paire, des pixels représentatifs du contour du toit compris dans ladite zone.
La figure 7B représente le résultat de l'étape de vectorisation des pixels détectés sur la figure 7A.
La figure 8A est un agrandissement d'une zone B de la figure 5C qui est encadrée par des tirets, pour mieux illustrer le résultat de l'étape de détection, sur la première image stéréoscopique de la paire, des pixels représentatifs des arêtes du toit compris dans ladite zone.
La figure 8B représente le résultat de l'étape de vectorisation des pixels détectés sur la figure 8A.
La figure 8C représente un résultat intermédiaire de l'étape de vectorisation des pixels détectés sur la figure 8A.
Les figures 9A et 9B représentent un exemple d'une paire d'images stéréoscopiques.
Les figures 10A et 10B représentent chacune une image épipolaire construite à partir d'une image correspondante de l'exemple représenté sur les figures 9A et 9B.
Les figures 11A et 11B représentent chacune une superposition de deux images épipolaires dans le système de coordonnée Image, la figure 11B représentant en plus les lignes de toit représentant les arêtes de toit telles que vectorisées à partir de chacune des images stéréoscopiques illustrées sur les figures 9A et 9B.
Les figures 12A et 12B représentent chacune la carte de disparité construite à partir des deux images épipolaires illustrées sur les figures 10A et 10B, la figure 12B représentant en plus les lignes de toit représentant les arêtes de toit telles que vectorisées à partir de l'image stéréoscopique illustrée sur la figure 9B.
La figure 12C illustre le résultat d'une optimisation du procédé selon le premier aspect de l'invention par réduction de l'espace de recherche de chaque corrélation, chaque espace de recherche y étant illustré sous la forme d'un rectangle en tirets.
La figure 12D est un agrandissement de la partie encadrée sur la figure 12C, et illustre, par des flèches, des exemples d'implémentation d'une fonction de contraintes d'unicité et d'ordre.
La figure 12E illustre un exemple de mise en œuvre d'une étape de corrélation entre lignes de toit selon un mode de réalisation du procédé selon le premier aspect de l'invention.
La figure 13 représente un exemple d'un modèle tridimensionnel de toit d'un bâtiment reconstruit par mise en œuvre du procédé selon le premier aspect de l'invention.
La figure 14 représente l'exemple illustré sur la figure 13, le modèle tridimensionnel comprenant en plus les façades du bâtiment.
La figure 15 représente l'exemple illustré sur la figure 14, suite à une triangulation des différentes surfaces définies par le modèle tridimensionnel.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon une première modalité de mise en œuvre du procédé, chaque image est une image ortho-rectifiée ou équivalemment une ortho-image et les données associées à chaque image sont des métadonnées comprenant au moins, voire consistant en, un azimut et une élévation associés à la prise de vue de l'image.
Selon une deuxième modalité de mise en œuvre du procédé, alternative ou complémentaire relativement à la première modalité susmentionnée, les images stéréoscopiques sont acquises par satellites et les données associées à chaque image comprennent, voire consistent en, un modèle géométrique, par exemple un modèle de coefficients polynomiaux rationnels (ou RPC pour l'acronyme anglo-saxon de « Rational Polynomial Coefficients »).

Chaque image de la paire présente une résolution minimale sensiblement égale à 1,50 m/pixel, et de préférence une résolution sensiblement égale à 0,30 m/pixel.

Selon un exemple, la détection, dans chaque image stéréoscopique de la paire, des pixels représentatifs d'un contour et d'éventuelles arêtes du toit dudit au moins un bâtiment comprend :
- La détection, dans chaque image stéréoscopique de la paire, des pixels représentatifs d'un contour du toit dudit au moins un bâtiment, et
- La détection, dans chaque image stéréoscopique de la paire, des pixels représentatifs d'éventuelles arêtes du toit dudit au moins un bâtiment,
chacune de ces sous-étapes étant mise en œuvre par implémentation d'un modèle d'apprentissage, et de préférence par implémentation d'un modèle d'apprentissage profond, dédié.

Selon une particularité de l'exemple précédent, la détermination, dans chaque image stéréoscopique de la paire, d'au moins un polygone bidimensionnel décrivant le contour du toit dudit au moins un bâtiment et/ou d'au moins une ligne de toit décrivant une éventuelle arête du toit dudit au moins un bâtiment comprend :
- La détermination, à partir des pixels représentatifs du contour du toit dudit au moins un bâtiment tels que précédemment détectés et le cas échéant sous au moins une contrainte de régularité, telle qu'une présence d'un angle droit entre deux arêtes du contour du toit ou une minimisation du nombre de sommets dudit au moins un polygone bidimensionnel, d'un ensemble de coordonnées Image des sommets du polygone bidimensionnel, et/ou
- La détermination, à partir des pixels représentatifs de l'éventuelle arête du toit dudit au moins un bâtiment tels que précédemment détectés :
   ▪ dans le cas d'une génération d'un squelette compressé, d'un couple de coordonnées Image d'extrémités de chaque ligne de toit, chaque extrémité étant identifiée à un pixel ou à un point de l'image détecté comme réalisant une jonction entre au moins deux arêtes de toit,
   ▪ dans le cas d'une génération d'un squelette non compressé, d'une liste de coordonnées Image définissant un chemin représentatif de chaque ligne de toit.

Selon un mode de réalisation de la particularité précédente, la détermination, dans chaque image stéréoscopique de la paire, d'au moins un polygone bidimensionnel décrivant le contour du toit dudit au moins un bâtiment et/ou d'au moins une ligne de toit décrivant une éventuelle arête du toit dudit au moins un bâtiment peut comprendre en outre, par bâtiment :
- la détermination d'une première distance minimale entre chaque coordonnée Image des extrémités de chaque ligne de toit du bâtiment considéré et le polygone bidimensionnel décrivant le contour du toit du bâtiment considéré, puis
- la fusion entre un point du polygone bidimensionnel et une coordonnée Image d'une extrémité de ligne de toit qui, sur la base de la première distance minimale précédemment déterminée, respecte un premier critère de proximité prédéterminé avec ledit point, et/ou
- lorsque plusieurs lignes de toit sont à considérer, la détermination d'une deuxième distance minimale entre coordonnées Image des extrémités des lignes de toit considérées deux à deux, puis
- la fusion entre elles des coordonnées Image des extrémités des lignes de toit qui, sur la base de la deuxième distance minimale précédemment déterminée, respectent un deuxième critère de proximité prédéterminé.

Selon un exemple du mode de réalisation précédent, la fusion entre le point du polygone bidimensionnel et ladite coordonnée Image d'une extrémité de ligne toit et/ou la fusion entre elles desdites coordonnées Image des extrémités des lignes de toit comprend leur remplacement par une coordonnée Image déterminée en fonction des coordonnées Image à fusionner entre elles, par exemple par une coordonnée Image du barycentre des coordonnées Image à fusionner entre elles.

Selon un autre exemple, la détermination de la coordonnée Monde de chaque sommet de chaque polygone bidimensionnel précédemment déterminé et/ou de chaque extrémité de chaque ligne de toit précédemment déterminée comprend une extraction de l'élévation de chaque coordonnée Monde à déterminer par corrélation entre elles des images stéréoscopiques de chaque paire.

Selon un autre exemple, le procédé peut comprendre, pour chaque image stéréoscopique de la paire, une construction, à partir de l'image stéréoscopique considérée, d'une image épipolaire, et une détermination, à partir des données fournies et associées à chaque paire d'images stéréoscopiques, d'une deuxième fonction stéréoscopique fonctionnelle dans un espace épipolaire associé aux images épipolaires construites à partir des images stéréoscopiques de la paire.

Selon une particularité de l'exemple précédent, le procédé peut comprendre, à partir des images épipolaires précédemment construites pour chaque paire d'images stéréoscopiques, une construction d'une carte de disparité. Pour chaque couple {im_epiᵢ,im_epiⱼ}, le calcul d'une corrélation entre les deux images épipolaires précédemment construites permet de produire une carte de disparité dispᵢⱼ où dispᵢⱼ(px,py) = pxepiᵢ - pxepiⱼ.

Selon la particularité précédente, le procédé peut comprendre, pour chaque carte de disparité construite, une construction d'un modèle numérique de surface, puis, lorsque plusieurs cartes de disparité sont construites à partir de paires d'images stéréoscopiques différentes entre elles, une fusion entre eux des modèles numériques de surface construits.

Selon un autre exemple, le procédé peut comprendre, avant la détermination des coordonnées Monde de chaque sommet du polygone bidimensionnel précédemment déterminé et/ou de chaque extrémité de chaque ligne de toit précédemment déterminée, une extraction, à partir d'au moins une des images stéréoscopiques, d'un masque dudit au moins un bâtiment et des éventuels autres objets photographiés, tels que les arbres, cette extraction étant mise en œuvre en implémentant un modèle d'apprentissage, de préférence profond, dédié.

Selon les deux exemples précédents, le procédé peut comprendre une construction d'un modèle numérique de terrain, à partir du masque dudit au moins un bâtiment et des éventuels autres objets photographiés et d'au moins un modèle numérique de surface précédemment construit, de préférence à partir du modèle numérique de surface issu de la fusion entre eux de plusieurs modèles numériques de surface précédemment construits.

Selon un autre exemple, l'extraction de l'élévation de chaque coordonnée Monde à déterminer par corrélation entre elles des images stéréoscopiques de chaque paire comprend, pour chaque bâtiment :
- pour chaque image épipolaire, une projection, sur l'image épipolaire considérée et selon la deuxième fonction stéréoscopique fonctionnelle dans l'espace épipolaire, du polygone bidimensionnel décrivant le contour du toit du bâtiment considéré et/ou de ladite au moins une ligne de toit décrivant une éventuelle arête du toit du bâtiment considéré,
- pour chaque paire d'images épipolaires, une mise en corrélation entre sommets des polygones bidimensionnels et/ou entre extrémités des lignes de toit tels que projetés sur les images épipolaires de la paire,
- Pour chaque mise en corrélation, une détermination d'un déplacement entre sommets mis en corrélation et/ou entre extrémités mises en corrélation, et
- Une détermination de l'élévation de chaque de chaque sommet dudit polygone bidimensionnel et/ou de chaque extrémité de ladite au moins une ligne de toit, en fonction du déplacement correspondant précédemment déterminé.

Selon un premier mode de réalisation de l'alinéa précédent, la mise en corrélation entre sommets des polygones bidimensionnels et/ou entre extrémités des lignes de toit tels que projetés sur les images épipolaires de la paire, peut comprendre une limitation, dans l'espace épipolaire et sur une image épipolaire de la paire, d'un espace de recherche de chaque corrélation à un ensemble restreint de lignes de pixels ou de points autour de, voire centré sur, la ligne de pixels ou de points comprenant le sommet du polygone bidimensionnel et/ou l'extrémité de la ligne de toit à mettre en corrélation avec un sommet du polygone bidimensionnel et/ou une extrémité de la ligne de toit tel que projeté sur l'autre image épipolaire de la paire. L'espace de recherche des pixels ou des points se correspondants deux à deux entre les images épipolaires peut ainsi être avantageusement réduit à un ensemble de segments de droites épipolaires. Ceci limite les ressources informatiques nécessaires à l'implémentation du procédé selon l'invention relativement aux solutions de l'état de la technique.

Selon un deuxième mode de réalisation alternatif ou complémentaire du premier mode de réalisation précédent, la mise en corrélation entre sommets des polygones bidimensionnels et/ou entre extrémités des lignes de toit tels que projetés sur les images épipolaires de la paire, comprend une limitation de l'espace de recherche, dans l'espace épipolaire et sur une image épipolaire de la paire, par obtention, à partir de la carte de disparité, d'une première approximation du déplacement entre pixels ou entre points correspondants entre eux dans les images épipolaires de la paire. L'espace de recherche des pixels ou des points se correspondants deux à deux entre les images épipolaires peut ainsi être avantageusement réduit, notamment en minimisant l'étendue des segments de droites épipolaires. Plus particulièrement, l'étendue de l'espace de recherche sur chaque ligne épipolaire considérée pour chaque sommet du polygone bidimensionnel ou chaque extrémité de lignes de toit est égale à la valeur donnée par la carte de disparité qui correspond audit sommet ou à ladite extrémité, l'espace de recherche étant centré sur ledit sommet ou à ladite extrémité, respectivement.

Selon un troisième mode de réalisation alternatif ou complémentaire du premier et/ou du deuxième des modes de réalisation précédents, le procédé peut comprendre, après la détermination du déplacement entre lesdits sommets correspondants entre eux et/ou entre lesdites extrémités correspondantes entre elles, un contrôle des corrélations précédemment établies pour permettre de déterminer, parmi d'éventuelles multiples correspondances entre sommets et/ou entre extrémités identifiées dans une image épipolaire de la paire pour un même sommet et/ou une même extrémité de l'autre image épipolaire de la paire, celle qui minimise la différence entre une valeur de disparité d'un pixel de la carte de disparité correspondant audit même sommet et/ou ladite même extrémité et les déplacements précédemment déterminés correspondants auxdites éventuelles multiples correspondances.

Selon l'un quelconque des trois modes de réalisation précédents, la mise en corrélation entre sommets des polygones bidimensionnels et/ou entre extrémités des lignes de toit tels que projetés sur les images épipolaires de la paire, comprend l'implémentation d'une fonction de contraintes d'unicité et d'ordre :
- entre sommets du polygone bidimensionnel tel que projeté sur la première image épipolaire de la paire et sommets du polygone bidimensionnel tel que projeté sur la deuxième image épipolaire de la paire, qui sont situés, dans les deux images épipolaires, sensiblement sur une même ligne de pixels ou de points, et/ou, de préférence puis,
- entre extrémités de ladite au moins une ligne de toit telle que projetée sur la première image épipolaire de la paire et extrémités de ladite au moins une ligne de toit telle que projetée sur la deuxième image épipolaire de la paire, qui sont situées, dans les deux images épipolaires, sensiblement sur une même ligne de pixels ou de points.

Selon l'un quelconque des trois modes de réalisation précédents, et en combinaison ou en alternative avec la caractéristique précédente, le procédé peut comprendre, après la mise en corrélation entre sommets des polygones bidimensionnels et/ou entre extrémités des lignes de toit tels que projetés sur les images épipolaires de la paire :
- La vérification que chaque sommet dudit polygone bidimensionnel et/ou chaque extrémité de ladite au moins une ligne de toit d'une première image épipolaire de la paire a été mis en corrélation avec un sommet dudit polygone bidimensionnel et/ou une extrémité de ladite au moins une ligne de toit de la seconde image épipolaire.
- Si un sommet dudit polygone bidimensionnel et/ou une extrémité de ladite au moins une ligne de toit de ladite première image épipolaire n'a pas été mis en corrélation avec un sommet dudit polygone bidimensionnel et/ou une extrémité de ladite au moins une ligne de toit de ladite seconde image épipolaire.
- Une discrétisation du côté dudit polygone bidimensionnel et/ou de ladite au moins une ligne de toit qui, sur la première image épipolaire, comprend le sommet et/ou l'extrémité n'ayant pas été mis en corrélation, puis
- Une discrétisation du côté dudit polygone bidimensionnel et/ou de ladite au moins une ligne de toit qui, sur la seconde image épipolaire, correspond au côté dudit polygone bidimensionnel précédemment discrétisé et/ou à ladite au moins une ligne de toit précédemment discrétisée, respectivement,
   les discrétisations se correspondant entre elles en termes de nombres de points de discrétisation et de distances entre points de discrétisation successifs dans une direction perpendiculaire aux lignes de pixels, et
- Une mise en corrélation de chaque point de discrétisation sur la première image épipolaire avec un point de discrétisation sur la seconde image épipolaire de la paire.

La reconstruction du modèle tridimensionnel du toit dudit au moins un bâtiment comprend, pour au moins une des images stéréoscopiques, voire pour chaque image stéréoscopique, la construction d'un ensemble d'au moins un polygone tridimensionnel par projection dans un repère orthonormé des coordonnées Monde précédemment déterminées.

La reconstruction du modèle tridimensionnel du toit dudit au moins un bâtiment selon la caractéristique précédente est basée sur les coordonnées Monde déterminées pour l'image stéréoscopique qui, parmi les images stéréoscopiques de la paire, présente une élévation la plus proche de 90°.

En alternative à la caractéristique précédente, la reconstruction du modèle tridimensionnel du toit dudit au moins un bâtiment est basée sur les coordonnées Monde déterminées pour au moins deux images stéréoscopiques fournies et par fusion entre eux des polygones tridimensionnels de chaque ensemble construit pour chaque image stéréoscopique en prenant comme référence au moins une coordonnée Monde déterminée pour l'image stéréoscopique qui, parmi les images stéréoscopiques de la paire, présente une élévation la plus proche de 90°. Le cas échéant, ladite fusion comprend l'ajout, à un premier ensemble d'au moins un polygone tridimensionnel, de coordonnées Monde présentes dans un autre ensemble d'au moins un polygone tridimensionnel et absentes dudit premier ensemble.

En alternative ou en complément, la reconstruction du modèle tridimensionnel du toit dudit au moins un bâtiment comprend, si des coordonnées Monde telles que précédemment déterminées représentent un segment non joint au reste dudit ensemble d'au moins un polygone tridimensionnel, la suppression de ces coordonnées Monde. Ces coordonnées sont alors jugées relatives à un artefact que le procédé permet de traiter de façon simple, par leur suppression.

En alternative ou en complément, la reconstruction du modèle tridimensionnel du toit dudit au moins un bâtiment comprend, si des coordonnées Monde telles que précédemment déterminées représentent un segment joint par une seule de ses deux extrémités au reste dudit ensemble d'au moins un polygone tridimensionnel, le prolongement dudit segment par son extrémité non jointive jusqu'à une première intersection avec un côté dudit au moins un polygone tridimensionnel.

Lorsque les images fournies ne sont pas ortho-rectifiées, la reconstruction du modèle tridimensionnel du toit dudit au moins un bâtiment selon le procédé introduit ci-dessus peut comprendre en outre une reconstruction des façades dudit au moins un bâtiment en fonction d'un modèle numérique de terrain construit à partir:
- d'un masque dudit au moins un bâtiment et d'éventuels autres objets photographiés, le masque ayant été extrait d'au moins une des images stéréoscopiques par un modèle d'apprentissage, de préférence dit profond, dédié, et
- d'au moins un modèle numérique de surface construit à partir d'au moins une carte de disparité telle qu'introduite ci-dessus.

La reconstruction du modèle tridimensionnel du toit dudit au moins un bâtiment selon le procédé introduit ci-dessus peut comprendre en outre une simplification en plan d'au moins un ensemble d'au moins un polygone tridimensionnel précédemment construit ou d'un ensemble d'au moins un polygone tridimensionnel construit par fusion entre eux des polygones tridimensionnels de chaque ensemble construit pour chaque image stéréoscopique.

La reconstruction du modèle tridimensionnel du toit dudit au moins un bâtiment selon le procédé introduit ci-dessus peut comprendre en outre une triangulation d'au moins une face d'au moins un polygone tridimensionnel d'au moins un ensemble précédemment construit.

Il est précisé que dans le cadre de la présente invention :
- Une coordonnée dans le système de coordonnées Image (position dans l'image), dite coordonnée Image, est nommée (px,py). Chaque couple de valeurs d'une coordonnée Image peut être un couple de valeurs entières localisant un pixel dans l'image (numéro de colonne et numéro de la ligne où se trouve le pixel) ou des valeurs réelles (ou flottantes) localisant un point dans l'image, ledit point n'ayant pas nécessairement d'étendue dans l'image contrairement à chaque pixel. Notamment, lors de l'étape de vectorisation, ledit au moins un polygone bidimensionnel décrivant le contour du toit dudit au moins un bâtiment et/ou ladite au moins une ligne dite de toit peuvent être décrits par un ensemble de sommets et/ou d'extrémités, dont chaque composante est située dans l'image par un point dont la coordonnée Image comprend un couple de valeurs réelles.
- Une coordonnée Géographique (par exemple latitude et longitude) est nommée (wx,wy),
- Une coordonnée dans le système de coordonnées Monde (par exemple coordonnée géographique plus une élévation), dite coordonnée Monde, est nommée (wx,wy,z),
- Le géo-référencement d'une image est la relation entre la coordonnée Image (px,py) et la coordonnée Géographique (wx,wy),
- Une image est une ortho-image si la relation entre coordonnée Image (px,py) et coordonnée Géographique (wx,wy) est indépendante de l'élévation notée z. Une ortho-image est donc une image rectifiée, notamment par le terrain,
- Une élévation est absolue (0 au niveau de mer) dans le cas des images non ortho-rectifiées, et relative (par rapport au terrain local, et plus particulièrement son élévation) dans le cas des images ortho-rectifiés.

Les revendeurs d'images satellites peuvent fournir aussi bien des ortho-images avec des métadonnées, que des images brutes associées à leur(s) modèle(s) de coefficients polynomiaux rationnels ou RPCs. La présente invention permet de gérer ces deux cas.

On entend, par un modèle géométrique, un modèle qui permet au moins une implémentation des deux fonctions suivantes :
- une conversion d'une coordonnée Image de chaque pixel ou chaque point de chaque image en coordonnée Monde et inversement si l'élévation z de cette coordonnée est connue, et
- une déduction de l'élévation associée à une coordonnée Géographique si la coordonnée Image du pixel ou du point de l'image correspondant est connue dans au moins deux images différentes entre elles. Le modèle géométrique dépend du capteur utilisé pour acquérir les images, et notamment du calibrage ou étalonnage de ce capteur, ainsi que des conditions de prise de vue.

On entend, par images stéréoscopiques, des images acquises avec des prises de vue différentes. Elles permettent d'extraire l'information d'élévation de chaque pixel ou de chaque point de l'image avec une précision altimétrique P. Cette précision dépend directement de la différence entre les prises de vue des images, et notamment de l'azimut et de l'élévation du capteur lors de chaque prise de vue, voire la résolution de l'image (en mètres). Pour un couple d'images stéréoscopiques i et j, la précision altimétrique P peut être approximée par P = dResolution / dBH où :
- dResolution = max( R_i,R_j) avec R_i(_j) la résolution de l'image i(j) en mètres, et
- dBH = sqrt(dTanSit_i * dTanSit_i + dTanSit_j * dTanSit_j - 2 * dTanSit_i * dTanSit_j * cos(A_i - A_j)), avec A_i(_j) l'azimut du capteur lors de la capture de l'image i(j) en radian, où
- dElv_i = π/2- E_i, avec E_i l'élévation du capteur lors de la capture de l'image i en mètres,
- dElv_j = π/2- E_j, avec E_j l'élévation du capteur lors de la capture de l'image j en mètres,
- dTanSit_i = tan(dElv_i), et
- dTanSit_j = tan(dElv_j).

On entend, par un modèle de bâtiment 3D géo-référencé (i.e. situé dans le Monde), un modèle composé d'une liste de vertex (ou sommets) et d'arêtes où, à chaque vertex, est associée une position dans le Monde (i.e. une coordonnée Monde (wx,wy,z)).

Le procédé de reconstruction 100 d'un modèle tridimensionnel 6 d'un toit 10 d'au moins un bâtiment 1 par analyse d'images acquises par télédétection selon le premier aspect de l'invention est décrit ci-dessous en référence aux figures annexées.

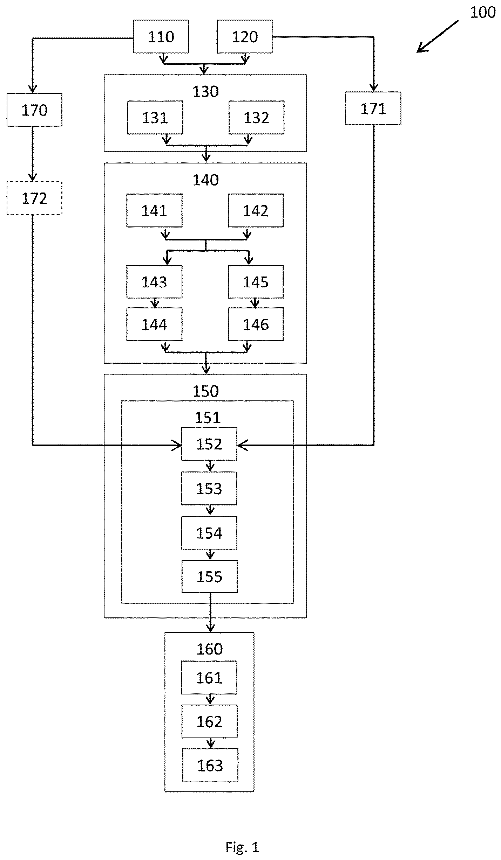

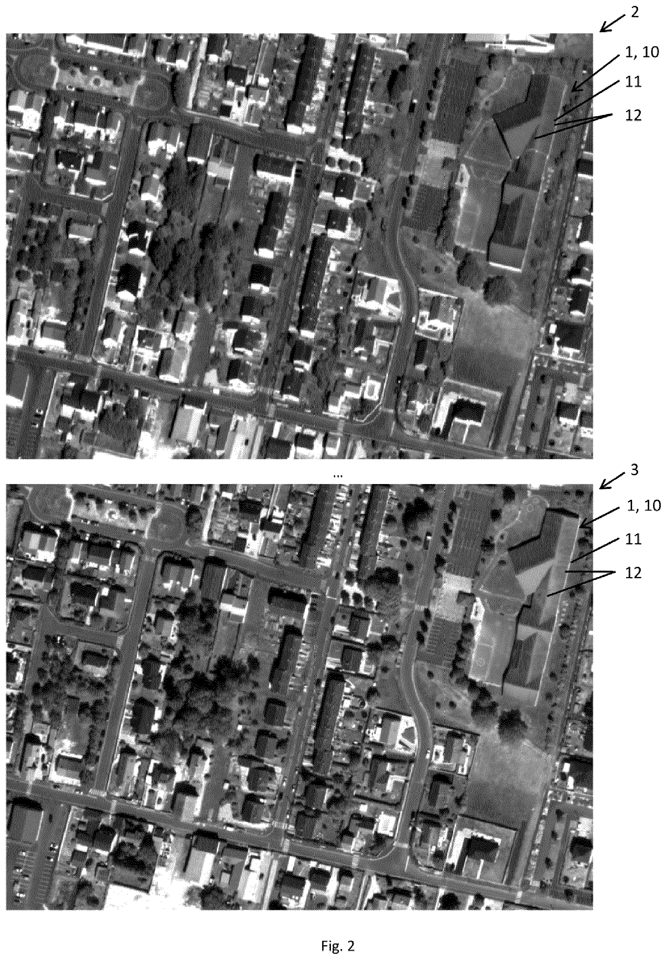

En référence à la figure 1, le procédé 100 comprend tout d'abord une étape de fourniture 110 d'au moins une paire d'images stéréoscopiques 2 et 3, tel qu'illustrée sur la figure 2, et une étape de fourniture 120 de données associées à chaque image stéréoscopique fournie 110.

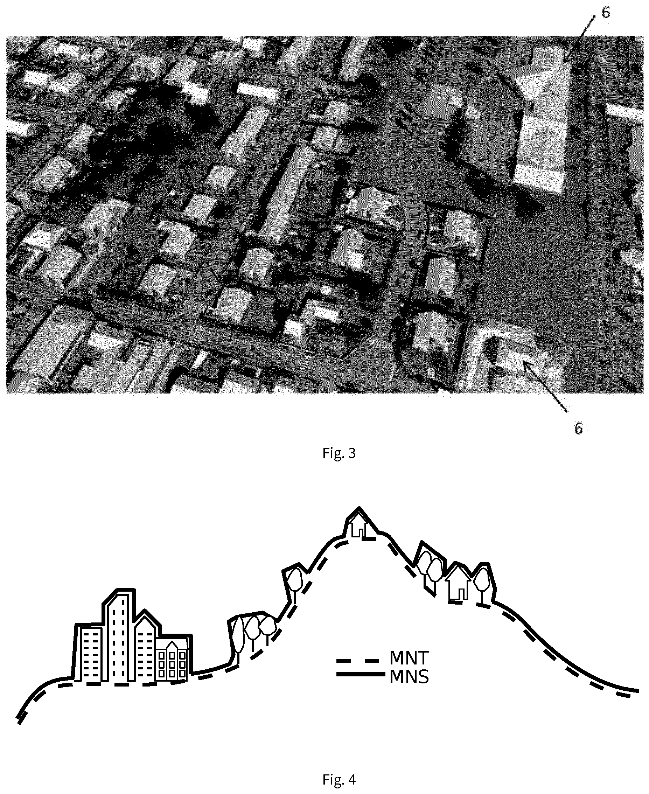

En référence à la figure 2, chacune des images stéréoscopiques 2, 3 de la paire représentent le toit 10 du bâtiment 1 dont on souhaite reconstruire 160 le modèle tridimensionnel 6 tel qu'illustré sur la figure 3.

Les données fournies 120 définissent, pour chaque paire d'images stéréoscopiques 2 et 3, une fonction dite stéréoscopique permettant une déduction d'une élévation d'une coordonnée Monde, si une coordonnée Image (px,py) du pixel (ou du point) correspondant à la coordonnée Monde (wx,wy,z) considérée est connue dans chacune des images 2 et 3 de la paire.

Le cas échéant, les données fournies 120 définissent également une fonction dite de conversion d'une coordonnée Image de chaque pixel (ou de chaque point) de chaque image en coordonnée Monde, et inversement connaissant l'élévation z associé au pixel (ou au point) considéré.

Par la suite, nous considérerons un unique bâtiment, pour simplifier la description, mais le procédé 100 peut être implémenté de la même façon que celle décrite ci-dessous pour reconstruire 160 les modèles tridimensionnels 6 des toits 10 de plusieurs bâtiments 1 photographiés, éventuellement de façon concomitante, comme illustré sur la figure 3.

Il est à noter que le toit 10 du bâtiment 1 peut être plat ou d'un seul versant ; la présence d'arêtes de toit 12, et en particulier d'arêtes de toit 12 intérieures (relativement au contour 11 du toit) n'est donc qu'éventuelle. Le procédé 100 est avantageusement adapté à cette éventualité, sans pour autant y être limité. Par la suite, nous considérerons, pour simplifier la description, le cas où le toit 10 du bâtiment 1 dont on cherche à reconstruire 160 le modèle tridimensionnel 6 comprend non seulement les arêtes de toit 12 constitutif du contour 11 du toit 10, mais également des arêtes de toit 12 intérieures relativement au contour 11 du toit 10.

Deux modalités d'implémentation des étapes de fourniture 110 et 120 sont envisagées, notamment en fonction de la nature du capteur ou des capteurs dont les prises de vue sont issues.

Selon une première modalité de mise en œuvre du procédé 100, chaque image 2, 3 est une image ortho-rectifiée ou équivalemment une ortho-image et les données associées à chaque image sont des métadonnées comprenant au moins, voire consistant en, un azimut et une élévation associés à la prise de vue de l'image.

La seule fourniture des métadonnées ordinairement associées à chaque image ortho-rectifiée est alors en effet avantageusement suffisante pour définir ladite fonction stéréoscopique, et le cas échéant ladite fonction de conversion.

Selon une deuxième modalité de mise en œuvre du procédé 100, alternative ou complémentaire relativement à la première modalité susmentionnée, les images stéréoscopiques 2 et 3 sont acquises par satellites et les données associées à chaque image 2, 3 comprennent, voire consistent en, un modèle de coefficients polynomiaux rationnels (ou RPC pour l'acronyme anglo-saxon de « Rational Polynomial Coefficients »).

La mise en œuvre du procédé selon le premier aspect de l'invention est donc permise avec des images acquises par satellites, en complément ou en alternative à des images dites aériennes, prises par exemple par LIDAR, par drone ou par avion, et dont la résolution est aisément meilleure que celle des images prises par satellites.

De préférence, chaque image de la paire présente une résolution minimale sensiblement égale à 1,50 m/pixel, et de préférence une résolution sensiblement égale à 0,30 m/pixel.

Selon l'une ou l'autre des deux modalités supportées par le procédé 100 selon le premier aspect de l'invention, les données fournies 120 définissent un modèle géométrique, comme par exemple un « modèle de coefficients polynomiaux rationnels » lorsque les images ont été prises par satellites, comprenant :
- pour chaque paire d'images stéréoscopiques 2 et 3, la fonction stéréoscopique qui peut être exprimée de la façon suivante :
   f_img_img_to_world(rpcᵢ,pxᵢ,pyᵢ,rpcⱼ,pxⱼ,pyⱼ):(wx,wy,z) ou (pxᵢ,pyᵢ) est la coordonnée Image d'un pixel ou d'un point identifié dans l'image i, (pxⱼ,pyⱼ) est la coordonnée Images de ce même pixel ou de ce même point identifié dans l'image j et (wx,wy,z) est sa coordonnée monde où z est son élévation ; voire
- pour chaque image stéréoscopique 2, 3, la fonction de conversion qui peut être exprimée de la façon suivante :
   f_img_to_world(rpc,px,py,z):(wx,wy,z) où (px,py) est la coordonnée Image d'un pixel ou d'un point dans l'image et (wx,wy,z) est sa coordonnée monde avec z l'élévation, ou inversement f_world_to_image(rpc,wx,wy,z):(px,py) où (px,py) est le coordonnée Image d'un pixel ou d'un point dans l'image, et (wx,wy,z) est sa coordonnée monde et z son élévation.

Suite à l'étape de fourniture 110, le procédé 100 selon le premier aspect de l'invention comprend une étape consistant à détecter 130, dans chaque image stéréoscopique 2, 3 de la paire, des pixels 21, 22, 31, 32 représentatifs du contour 11 et des arêtes 12 du toit 10 du bâtiment 1.

La mise en œuvre du procédé 100 selon le premier aspect de l'invention, si elle ne nécessite avantageusement pas la fourniture 110 d'images de haute qualité, n'est pour autant pas rendue inopérante par la fourniture 110 d'images de haute qualité, notamment du fait que ledit au moins un modèle d'apprentissage, en particulier lorsqu'il peut être dit profond, utilisé pour détecter 130 les pixels 21, 22, 31, 32 représentatifs du contour 11 et des arêtes 12 du toit 10 du bâtiment 1 peut être entraîné pour ne détecter que les pixels nécessaires et suffisants à une représentativité pertinente de la seule information sémantique nécessaire à la mise en œuvre du procédé 100, à savoir la position dans chaque image 2, 3 du contour 11 et des arêtes de toit 12, en particulier en évitant donc de détecter des pixels représentatifs d'informations sémantiques (notamment lucarnes, cheminées, antennes, panneaux solaires, ...) non pertinentes pour les besoins d'une reconstruction 160 en LOD2.

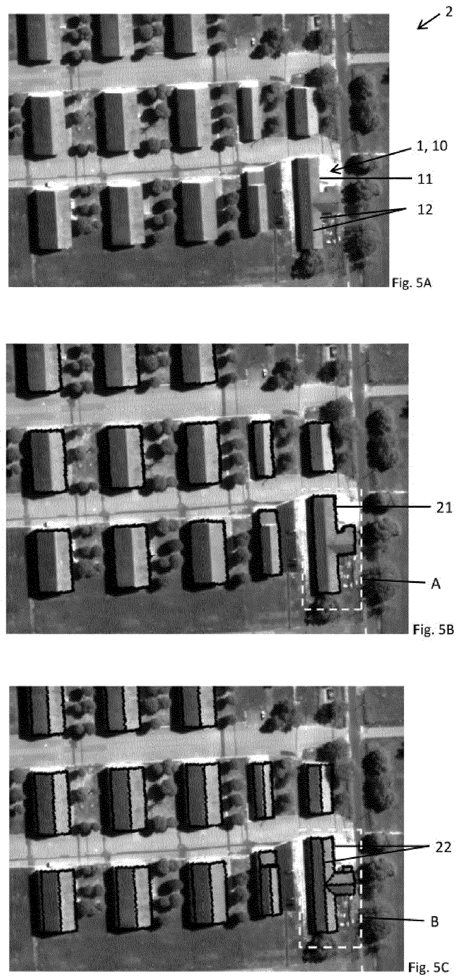

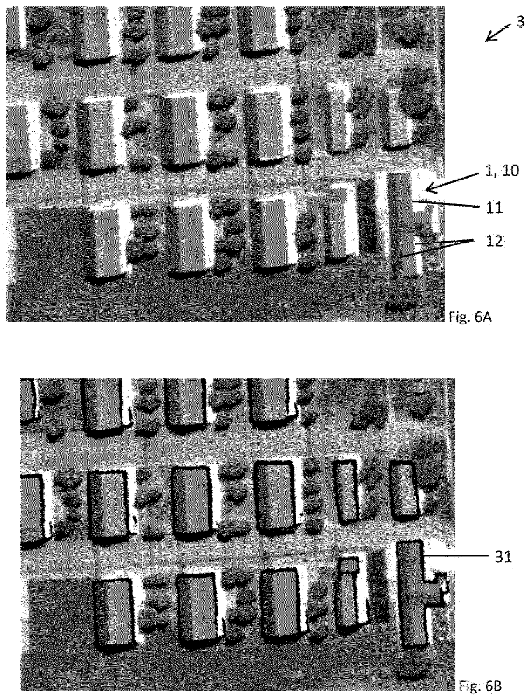

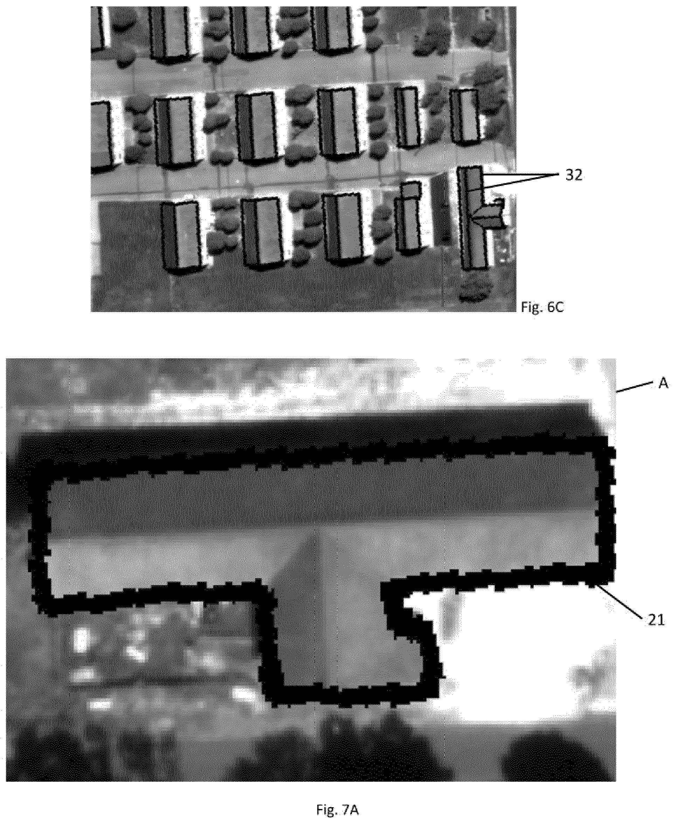

En référence aux figures 5A à 5C et 6A à 6C, la détection 130, dans chaque image stéréoscopique 2, 3 de la paire, des pixels 21, 22, 31, 32 représentatifs d'un contour 11 et des arêtes 12 du toit 10 du bâtiment 1 comprend :
- La détection 131, dans chaque image stéréoscopique 2, 3 de la paire, des pixels 21, 31 représentatifs du contour 11 du toit 10, et
- La détection 132, dans chaque image stéréoscopique 2, 3 de la paire, des pixels 22, 32 représentatifs des arêtes 12 du toit 10.

Chacune de ces sous-étapes 131 et 132 est mise en œuvre par implémentation d'un modèle d'apprentissage, et de préférence par implémentation d'un modèle d'apprentissage profond, dédié.

Le contour 11 du toit 10 du bâtiment 1 étant formé d'au moins trois arêtes de toit 12, le modèle d'apprentissage dédié à la détermination 132 des pixels 22, 32 représentatifs des arêtes du toit 10 peut détecter non seulement les pixels représentatifs des arêtes 12 du toit 10 qui sont situées à l'intérieur du contour 11 du toit 10, mais également les pixels 21, 31 représentatifs des arêtes de toit 12 formant le contour 11 du toit 10, ou du moins des pixels correspondants à ceux-ci. La détection 131 des pixels 21, 31 représentatifs du contour 11 du toit 10 peut ainsi être réalisée deux fois, indépendamment l'une de l'autre, par implémentation de chacun des deux modèles d'apprentissages dédiés à l'implémentation des sous-étapes 131 et 132.

Dès lors, pour chaque image stéréoscopique 2, 3 de la paire, il est permis de différencier les bâtiments 1 photographiés entre eux et de regrouper entre elles les arêtes de toit 12 d'un même bâtiment 1.

Suite à la détection 130 des pixels 21, 22, 31, 32 représentatifs d'un contour 11 et des arêtes 12 du toit 10 du bâtiment 1, le procédé 100 selon le premier aspect de l'invention comprend une étape consistant à déterminer 140, dans chaque image stéréoscopique 2, 3 de la paire, au moins un polygone bidimensionnel 41, 42 décrivant le contour 11 du toit 10 du bâtiment 1 et au moins une ligne dite de toit 51, 52 décrivant une arête 12 du toit 10 du bâtiment 1. Cette étape est basée sur une vectorisation des pixels 21, 22, 31, 32 précédemment détectés 130.

De la même façon que la détection 130 des pixels 21, 22, 31, 32 représentatifs d'un contour 11 et des arêtes 12 du toit 10 du bâtiment 1 peut être réalisée en deux sous-étapes, l'une 131 traitant du contour 11 du toit 10 et l'autre 132 traitant des arêtes 12 du toit 10, la détermination 140 peut-elle aussi être avantageusement réalisée en deux sous étapes.

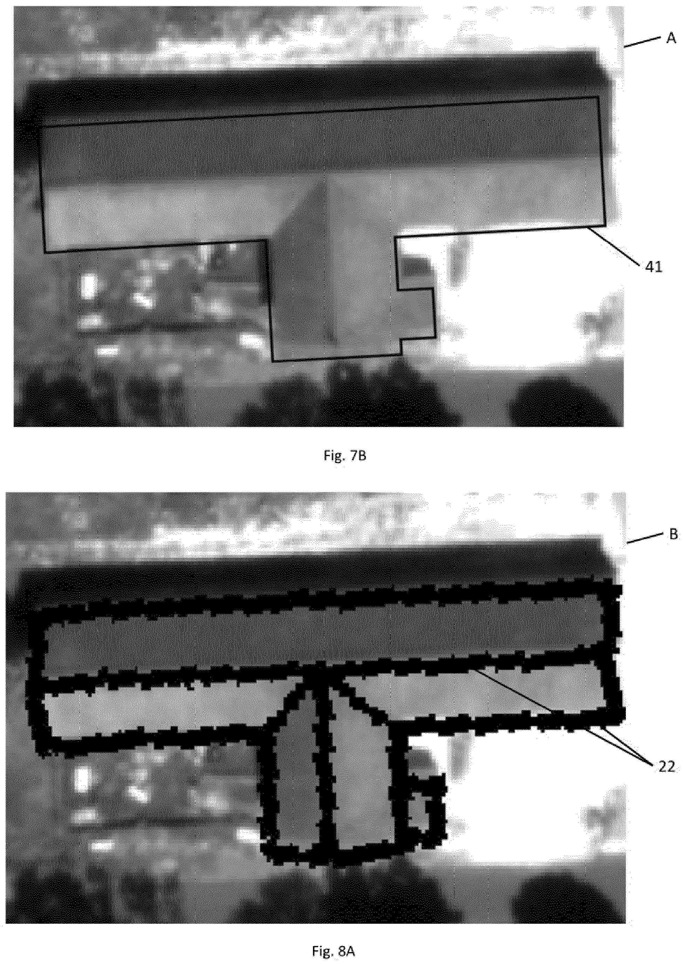

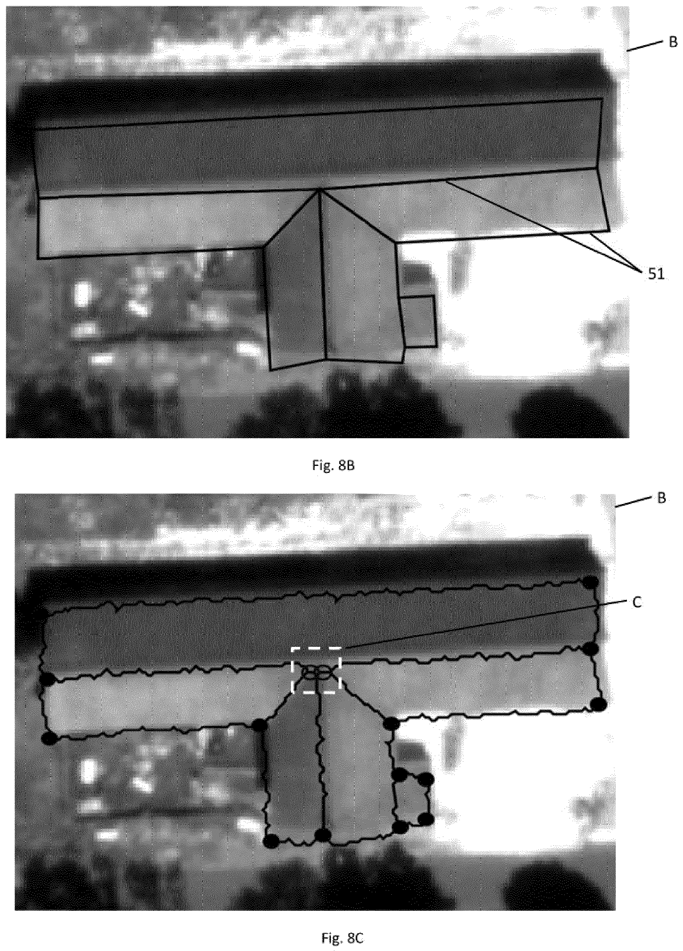

Plus particulièrement, l'étape de détermination 140 peut comprendre :
- en référence aux figures 7A et 7B, la détermination 141, à partir des pixels 21, 31 représentatifs du contour 11 du toit 10 du bâtiment 1 tels que précédemment détectés 130 à la sous-étape 131, d'un ensemble de coordonnées Image des sommets du polygone bidimensionnel 41, 42, et/ou
- en référence aux figures 8A et 8B, la détermination 142, à partir des pixels 22, 32 représentatifs de l'arête 12 du toit 10 du bâtiment 1 tels que précédemment détectés 130 à la sous-étape 132, d'un couple de coordonnées Image d'extrémités de chaque ligne de toit 51, 52, chaque extrémité pouvant être directement associée à une coordonnée Image comme réalisant une jonction entre au moins deux arêtes 12 du toit 10, au moins lorsque l'étape de détermination 142 conduit à la construction d'un squelette dit compressé tel que discuté plus bas.

En sortie de la première 141 de ces sous-étapes, chaque contour 11 du toit 10 de chaque bâtiment photographié est défini individuellement comme un polygone 2D : p = {(ppx,ppy)}.

En sortie de la deuxième 142 de ces sous-étapes, les arêtes de toit 12 de chaque bâtiment 1 photographié sont définies comme un ensemble de couples de coordonnées Images {(px1,py1),(px2,py2)}, chaque coordonnée Image d'un ensemble indiquant dans l'image correspondante la position d'une des deux extrémités d'une des arêtes de toit 12. Optionnellement, l'ensemble de couples de coordonnées Images {(px1,py1),(px2,py2)} décrivant les lignes de toit 51, 52 représentatives des arêtes de toit 12 peut être complété par la détection de lignes de toit, aussi bien sur un Modèle Numérique de Surface (Cf. infra), que sur au moins une des images stéréoscopiques 2 et 3, par des détecteurs de segment classiques. Toutefois, l'approche proposée est recommandée car elle permet de généraliser cette détermination 142 sans avoir besoin de changer de paramètre(s) 'à la main'. En alternative à l'approche proposée, l'étape de détermination 140 peut comprendre l'implémentation d'un modèle d'apprentissage dédié.

Plus particulièrement, les figures 7A et 7B illustrent, respectivement, le résultat de la sous-étape de détection 131 à partir de la première image stéréoscopique 2 de la paire et le résultat de la sous-étape de détermination 141 obtenue à partir du résultat de la sous-étape de détection 131 ; les figures 8A et 8B illustrent, respectivement, le résultat de la sous-étape de détection 132 à partir de la première image stéréoscopique 2 de la paire et le résultat de la sous-étape de détermination 142 obtenue à partir du résultat de la sous-étape de détection 132. Ainsi, les figures 7A, 7B, 8A et 8B se rapportent au traitement de la première image stéréoscopique 2 de la paire. D'autres figures équivalentes aux figures 7A, 7B, 8A et 8B, mais se rapportant au traitement de la seconde image stéréoscopique 3 de la paire, auraient également pu être annexées, sans néanmoins présenter d'autres intérêts que de permettre de faire figurer sur les figures les références numériques 42 et 52, la référence numérique 42 pointant vers un polygone bidimensionnel déterminé 141 à partir du résultat de la sous-étape de détection 131 obtenu par traitement de la seconde image stéréoscopique 3 de la paire, et la référence numérique 52 pointant vers les lignes de toit déterminées 142 à partir du résultat de la sous-étape de détection 132 obtenu par traitement de la seconde image stéréoscopique 3 de la paire.

Le cas échéant, la sous-étape de détermination 141 est fonction d'au moins une contrainte de régularité. Ladite au moins une contrainte de régularité peut comprendre la présence d'un angle droit entre deux arêtes 12 du contour 11 du toit 10, une minimisation du nombre de sommets du polygone bidimensionnel 41, 42, etc. Par exemple, la sous-étape de détermination 141 peut comprendre l'implémentation d'une méthode de vectorisation par optimisation identique ou inspirée de celle présentée dans l'article d'Alexander Gribov : Searching for a Compressed Polyline with a Minimum Number of Vertices (Discrete Solution), in: Fornés A., Lamiroy B. (eds) Graphics Recognition. Current Trends and Evolutions. GREC 2017. LNCS, vol 11009. Springer, pp. 54-68, 2018.

La mise en œuvre de la sous-étape de détermination 141 produit donc une image de contour des bâtiments (tel qu'illustré sur la figure 7B) pour chacune des images stéréoscopiques 2 et 3 de la paire. Une polygonisation des pixels 21 et 31 représentatifs du contour 11 du toit 10 du bâtiment 1 est ainsi réalisée, le cas échéant sous contrainte(s) de régularité, dans chaque image stéréoscopique de la paire. Cette polygonisation s'inscrit pleinement dans la recherche d'une compression des données (minimum de points, format vecteur) devant être fournies pour représenter le bâtiment 1 en LOD2. Il peut en être de même de la mise en œuvre de la sous-étape de détermination 142. On notera ici que cette polygonisation est avantageusement réalisée en coordonnées Image, c'est-à-dire avant tout passage en coordonnées Monde. La compression/simplification qu'elle permet d'atteindre peut ainsi profiter aux étapes ultérieures du procédé 100 selon le premier aspect de l'invention, et en particulier au passage de coordonnées Image en coordonnés Monde.

En sortie des deux sous-étapes 141 et 142, la vectorisation du contour 11 et des arêtes 12 du toit 10 de chaque bâtiment 1 photographié peut être considérée comme finalisée. Toutefois, si plusieurs toits de bâtiment sont photographiés et à reconstruire en 3D, il peut être nécessaire de fusionner les résultats respectifs de ces sous-étapes 141 et 142 entre eux, notamment pour s'assurer de différencier entre eux les différents toits et d'associer chaque arête 12 de toit 10 au bâtiment 1 auquel elle appartient. On comprend que, lorsqu'un seul toit de bâtiment est photographié et à reconstruire en 3D, la sous-étape 141 n'est qu'optionnelle, dans la mesure où les arêtes 12 de toit 10 telles que déterminées alors directement par mise en œuvre de la sous-étape 142 constituent un squelette compressé comprenant, non seulement les arêtes 12 intérieures au contour 11, mais également les arêtes 12 du contour 11 du toit 10.

En référence à la figure 1, la détermination 140, dans chaque image stéréoscopique 2, 3 de la paire, d'au moins un polygone bidimensionnel 41 , 42 décrivant le contour 11 du toit 10 du bâtiment 1 et/ou d'au moins une ligne de toit 51, 52 décrivant une arête 12 du toit 10 du bâtiment 1 peut comprendre en outre :
- la détermination 143 d'une première distance minimale entre chaque coordonnée Image des extrémités de chaque ligne de toit 51, 52 du bâtiment 1 considéré et le polygone bidimensionnel 41, 42 décrivant le contour 11 du toit 10 du bâtiment 1 considéré, puis
- la fusion 144 entre un point du polygone bidimensionnel 41, 42 et une coordonnée Image d'une extrémité de ligne de toit 51, 52 qui, sur la base de la première distance minimale précédemment déterminée, respecte un premier critère de proximité prédéterminé avec ledit point.

En complément ou en alternative aux sous-étapes 143 et 144, lorsque plusieurs lignes de toit 51, 52 sont à considérer, la détermination 140, dans chaque image stéréoscopique 2, 3 de la paire, d'au moins un polygone bidimensionnel 41, 42 décrivant le contour 11 du toit 10 du bâtiment 1 et/ou d'au moins une ligne de toit 51, 52 décrivant une arête 12 du toit 10 du bâtiment 1 peut comprendre en outre :
- la détermination 145 d'une deuxième distance minimale entre coordonnées Image des extrémités des lignes de toit 51, 52 considérées deux à deux, puis
- la fusion 146 entre elles des coordonnées Image des extrémités des lignes de toit 51, 52 qui, sur la base de la deuxième distance minimale précédemment déterminée, respectent un deuxième critère de proximité prédéterminé.

Le procédé 100 selon cette dernière particularité prévoit ainsi d'identifier, par bâtiment 1 photographié, les connexions probables entre le contour 11 du toit 10 du bâtiment 1 et les arêtes 12 du toit 10 du bâtiment 1 et/ou les connexions probables des arêtes 12 du toit 10 du bâtiment 1 entre elles, et de les fusionner ensemble, de sorte à obtenir, dans chaque image, une représentation bidimensionnelle encore simplifiée du toit 10 relativement à celle issue d'une simple superposition du polygone bidimensionnel 41 (ou 42) et des extrémités des lignes de toit 51 (ou 52) précédemment déterminés.

La vectorisation complète des arêtes de toit 12 peut ainsi consister à ajouter\fusionner avec, l'ensemble p = {(ppx,ppy)} définissant le polygone bidimensionnel 41 (ou 42) représentant le contour 11 du toit sur une image 2 (ou 3) donnée, l'ensemble des couples de coordonnées Images {(px1,py1),(px2,py2)} définissant les lignes de toit 51 (ou 52) représentatives des arêtes de toit 12, et en particulier des arêtes de toit 12 situées à l'intérieur du contour 11. L'approche consiste à identifier les points de connexions/jonctions probables entre les arêtes de toit 12 telles que vectorisées en sortie des deux sous-étapes 141 et 142, puis de relier entre elles leur représentation vectorielle.

Plus particulièrement, les arêtes de toit 12 (y compris celles du contour 11) telles que vectorisées en sortie de la sous-étape 142 constitue un squelette, compressé ou non, de l'image des arêtes de toit 12. Les points de connexion multiples dans ce squelette sont considérés comme représentatifs de sommets des arêtes de toit 12. Les points de connexion multiples considérés pour être des sommets sont les connexions d'au moins trois lignes de toit 51 (ou 52) dans le squelette, ou au minimum de deux lignes de toit 51 (ou 52) si cette connexion est proche d'un point du polygone bidimensionnel représentatif du contour 11 du toit 10. Dans ce dernier cas, un point peut ainsi être avantageusement ajouté au segment du polygone bidimensionnel 41 (ou 42) et/ou à la ligne de toit 51 (ou 52) à l'endroit de la connexion.

La fusion 144 entre le point du polygone bidimensionnel 41 (ou 42) et la coordonnée Image d'une extrémité de ligne toit 51 (ou 52) respectant le premier critère de proximité et/ou la fusion 146 entre elles des coordonnées Image des extrémités des lignes de toit 51 (ou 52) respectant le deuxième critère de proximité peut plus particulièrement comprendre leur remplacement par une coordonnée Image déterminée en fonction des coordonnées Image à fusionner entre elles. Par exemple, les coordonnées Image à fusionner entre elles le sont par leur remplacement par une coordonnée Image du barycentre des coordonnées Image à fusionner entre elles.

La figure 8C illustre un exemple concret de l'approche par création et analyse d'un squelette lorsque ce dernier n'est pas compressé. Cette figure 8C montre le squelette non compressé de l'image de toit créé à partir de l'image de la figure 8A, représentant le résultat de la détection 132 des pixels 22 (ou 32) représentatifs des arêtes de toit 12. La figure 8C constitue une représentation graphique donnée à titre d'exemple pour illustrer la façon dont les probables points de jonction à fusionner 144 et/ou 146 entre eux peuvent être identifiés, lorsque le squelette créé n'est pas compressé. Le squelette non compressé y apparaît comme une suite de segments joints successivement entre eux et pouvant être décrit par une liste de coordonnées Image définissant un chemin représentatif de chaque ligne de toit 51, 52. Les extrémités de lignes de toit 51 (ou 52) intérieures sont situées à l'intérieur des cercles vides et les extrémités de lignes de toit 51 (ou 52) qui intersectent le polygone bidimensionnel représentant le contour 11 du toit 10 sont situées à l'intérieur des cercles pleins. Chaque cercle est par exemple centré sur le sommet ou l'extrémité qu'il comprend. Le diamètre des cercles pleins peut représenter graphiquement le premier critère de proximité. Le diamètre des cercles vides peut représenter graphiquement le deuxième critère de proximité. Sur l'exemple, il apparaît que les deux cercles vides situés dans la région C de l'image sont partiellement superposés entre eux. Conséquemment, d'une part, un point peut être ajouté au segment du polygone bidimensionnel 41 (ou 42) et/ou à la ligne de toit 51 (ou 52) à l'endroit de leur connexion/intersection pour une meilleure représentation des arêtes 12 du contour 11, d'autre part les coordonnées Image d'un point situé au barycentre des points situés dans les cercles vides peuvent venir remplacer, dans l'ensemble des couples de coordonnées Images {(px1,py1),(px2,py2)}, les coordonnées Image des points situés dans les cercles vides. Les points de jonction ainsi définis peuvent ensuite être reliés pour former des lignes de toit 51 (ou 52) car le squelette, même non compressé, a l'information de chemin. La figure 8B peut alors être considérée comme montrant le résultat de la vectorisation finale, obtenue en prenant en compte toutes les informations susmentionnées, et notamment le résultat des fusions 144 et/ou 146.

Si la détection 132 de l'image des arêtes de toit 12 n'est pas complète, il est possible de se retrouver, à l'issue de l'étape de détermination 140, avec des points qui terminent un chemin. Les coordonnées Image de ces points sont conservées, dans l'ensemble des couples de coordonnées Images {(px1,py1),(px2,py2)}, comme point de connexion/jonction et pourront, lors de la détermination 150 de la coordonnée Monde de chaque sommet de chaque polygone bidimensionnel 41 (ou 42) et/ou de chaque extrémité de chaque ligne de toit 51 (ou 52), soit être corrélées à un autre point, soit être ultérieurement identifiées comme contenues dans une ligne de toit 52 (ou 51) issue de l'analyse d'une autre image stéréoscopique.

Suite à la détermination 140, dans chaque image stéréoscopique 2, 3 de la paire, d'au moins un polygone bidimensionnel 41, 42 décrivant le contour 11 du toit 10 du bâtiment 1 et/ou d'au moins une ligne de toit 51, 52 décrivant une arête 12 du toit 10 du bâtiment 1, le procédé 100 selon le premier aspect de l'invention comprend une étape consistant à déterminer 150 la coordonnée Monde de chaque sommet de chaque polygone bidimensionnel 41, 42 et/ou de chaque extrémité de chaque ligne de toit 51, 52 par implémentation de ladite fonction stéréoscopique. Cette détermination 150 peut plus particulièrement comprendre, ou consister en, une extraction 151 de l'élévation de chaque coordonnée Monde à déterminer par corrélation entre elles des images stéréoscopiques 2, 3 de chaque paire.

En entrée de l'étape 150, nous avons :
- pour chaque image stéréoscopique de la paire, l'ensemble p = {(ppx,ppy)} définissant le polygone bidimensionnel 41 (ou 42) représentant le contour 11 du toit 10 de chaque bâtiment 1 sur l'image considérée et/ou l'ensemble des couples de coordonnées Images {(px1,py1),(px2,py2)} définissant les lignes de toit 51 (ou 52) représentatives des arêtes de toit 12 de chaque bâtiment 1 sur l'image considérée, et
- pour chaque image stéréoscopique de la paire, la fonction stéréoscopique, voire également la fonction de conversion qui définit, avec la fonction stéréoscopique, le modèle géométrique associé à l'image considérée.

En sortie de l'étape 150, nous avons, pour chaque image et pour chaque bâtiment, un ensemble de coordonnées Monde {(wx1,wy1,z1),(wx2,wy2,z2)} (avec l'information d'élévation) issues de la projection dans le Monde des sommets de chaque polygone bidimensionnel 41, 42 et/ou des extrémités de chaque ligne de toit 51, 52 tel que précédemment déterminés 140.

La vectorisation des arêtes de toit 12 faite à l'étape 140 est en coordonnée Image pour chaque image 2, 3. Pour la reconstruction des bâtiments en 3D dans le système de coordonnées Monde, il manque l'information d'élévation z. Les fonctions stéréoscopiques permettent d'estimer cette élévation z de façon précise, si nous connaissons, dans au moins deux images, la coordonnée Image du sommet du polygone bidimensionnel 41, 42 et/ou de l'extrémité de la ligne de toit 51, 52 dont la coordonnée Monde est à déterminer 150. L'étape de détermination 150 est donc basée sur la corrélation, entre au moins deux images, des sommets du polygone bidimensionnel 41, 42 et/ou des extrémités des lignes de toit 51, 52, de façon opérationnelle.

L'extraction 151 de l'élévation de chaque coordonnée Monde à déterminer par corrélation entre elles des images stéréoscopiques 2, 3 de chaque paire pourrait être réalisée directement à partir desdites images stéréoscopiques. Néanmoins, l'espace de recherche de chaque corrélation ne serait alors pas optimisé ; le temps de calcul et les ressources informatiques nécessairement mises en œuvre pourraient être avantageusement réduits. Par ailleurs, la robustesse d'une telle approche directe pourrait être insuffisante. C'est pourquoi il est suggéré de procéder plutôt de la façon décrite ci-dessous.

Afin notamment de réduire l'espace de recherche de chaque corrélation, il est tout d'abord proposé que ladite extraction 151 de l'élévation de chaque coordonnée Monde soit réalisée dans l'espace épipolaire.

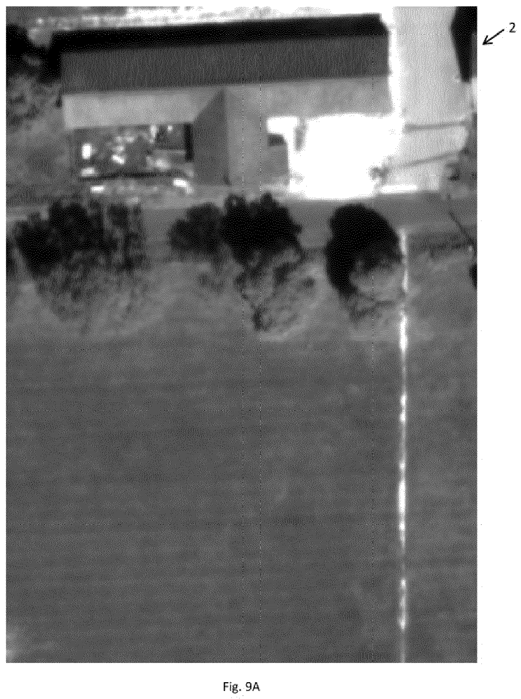

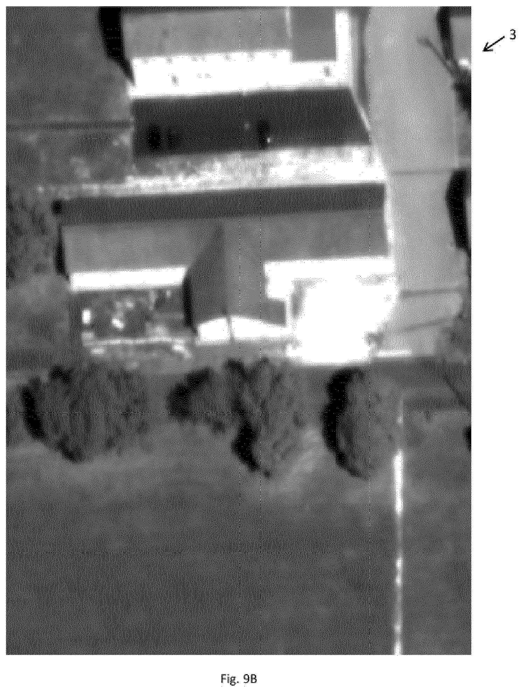

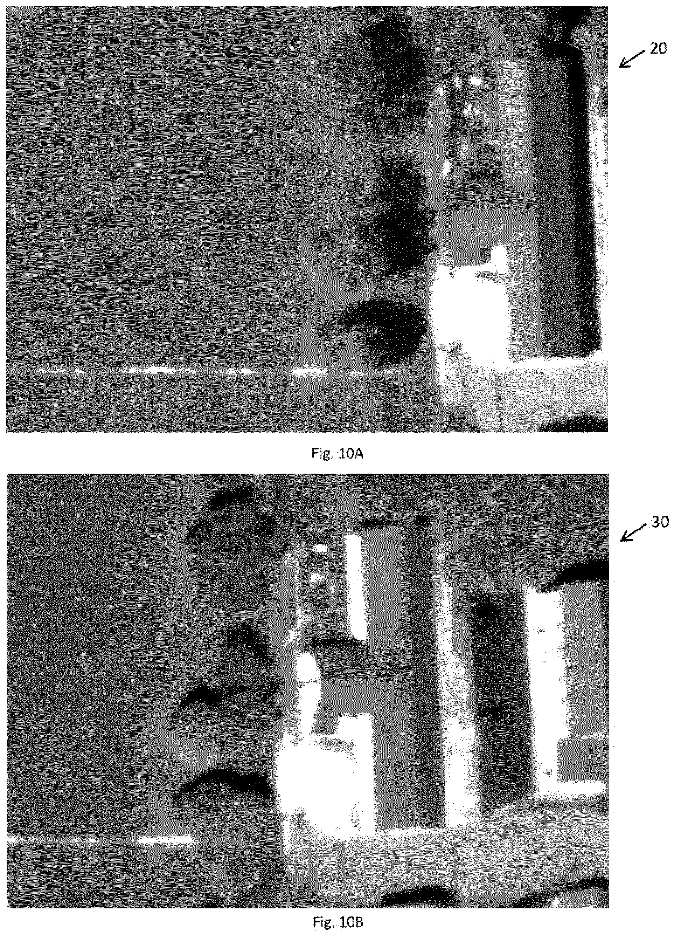

À cette fin, et en référence aux figures 9A et 9B et aux figures 10A et 10B, le procédé 100 selon le premier aspect de l'invention comprend tout d'abord, pour chaque image stéréoscopique 2, 3 de la paire, une construction 170, à partir de l'image stéréoscopique considérée, d'une image épipolaire 20, 30, et une détermination 171, à partir des données fournies 120 et associées à chaque paire d'images stéréoscopiques, d'une deuxième fonction stéréoscopique fonctionnelle dans l'espace épipolaire associé aux images épipolaires 20, 30 construites à partir des images stéréoscopiques 2, 3 de la paire. Comme l'illustrent les figures 10A et 10B, les images une fois projetées dans l'espace épipolaire sont alignées entre elles sur l'axe horizontal.

Plus particulièrement, dans l'espace épipolaire, un point ou un pixel de coordonnée Image (pxepii,pyepii) dans l'image im_epii est aligné sur l'axe horizontal avec le point ou le pixel de coordonnée Image (pxepij,pyepij) dans l'image im_epij . Cela signifie que pyepii = pyepij. Comme la fonction stéréoscopique initiale est transformée pour être cohérente dans l'espace épipolaire, les propriétés suivantes sont conservées, qui définissent le modèle géométrique dans l'espace épipolaire :
- f_img_epi_img_epi_to_elevation(pxepii,pyepii,pxepij,pyepij) = z, où pyepii = pyepij et z est l'élévation, et
- f_img_epi_to_world (pxepii,pyepii,z) = wx,wy,z.

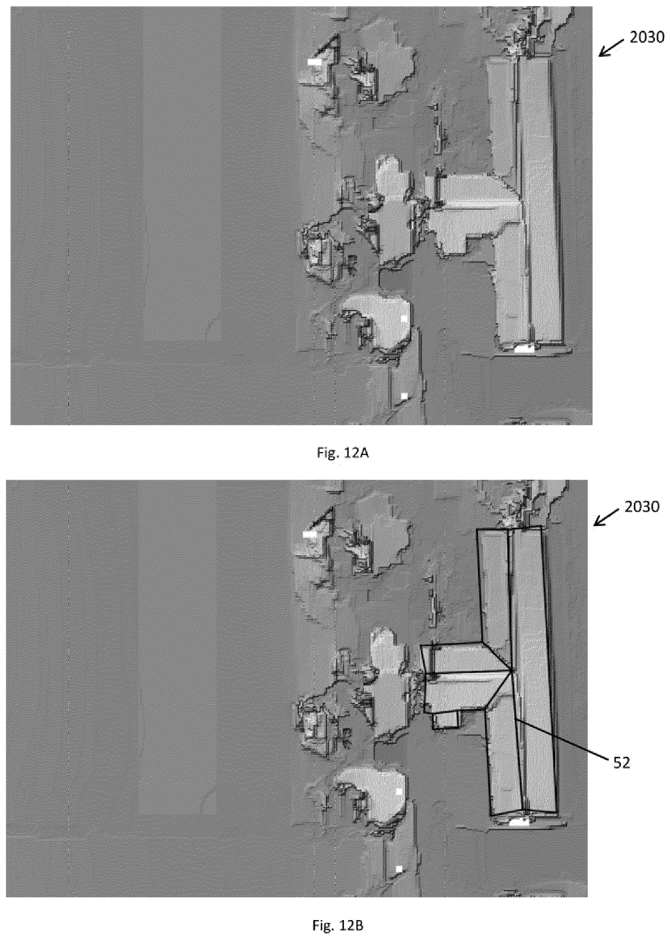

Notons ici que le procédé 100 selon le premier aspect de l'invention peut comprendre une construction 172, à partir des images épipolaires 20, 30 précédemment construites 170, d'une carte de disparité 2030 pour chaque paire d'images stéréoscopiques 2, 3. La carte de disparité 2030 construite 172 à partir des images épipolaires 20, 30 illustrées sur les figures 10A et 10B est telle qu'illustrée sur la figure 12A. Nous comprendrons par la suite que cette construction 172 n'est qu'optionnelle ; son usage décrit ci-dessous permettra d'améliorer le cas échéant la robustesse du procédé 100 selon le premier aspect de l'invention. En ce sens, notons également que, notamment lorsque les images stéréoscopiques 2 et 3 sont acquises par satellites, il peut ne pas être possible de construire une carte de disparité de qualité suffisante pour pouvoir être utilisée directement et de façon opérationnelle pour déterminer l'élévation des sommets et/ou des extrémités avec une précision suffisante pour les besoins d'une reconstruction en LOD2 ; c'est pourtant là une utilisation ordinaire de la carte de disparité 2030. Le procédé 100 selon les caractéristiques ci-dessous introduites en référence aux figures 9A à 12D offre une alternative avantageuse à une telle utilisation ordinaire de la carte de disparité 2030.

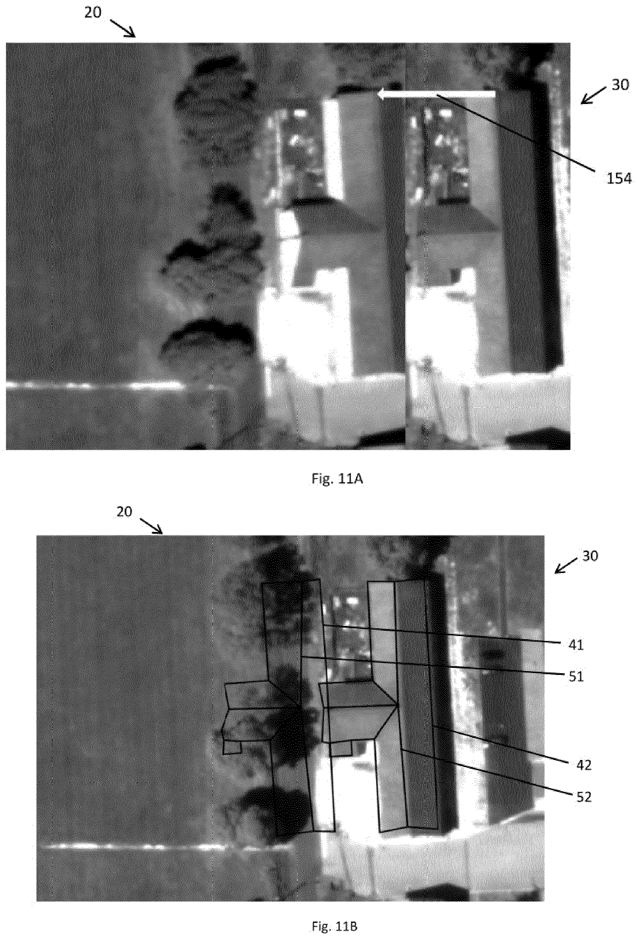

Ainsi, indépendamment du fait que la carte de disparité 2030 susmentionnée ait été ou non construite 172, l'extraction 151 de l'élévation de chaque coordonnée Monde à déterminer par corrélation entre elles des images stéréoscopiques 2, 3 de chaque paire peut comprendre, pour chaque bâtiment :
- pour chaque image épipolaire 20, 30, une projection 152, sur l'image épipolaire considérée et selon la deuxième fonction stéréoscopique fonctionnelle dans l'espace épipolaire, du polygone bidimensionnel 41, 42 décrivant le contour 11 du toit 10 du bâtiment 1 et/ou de ladite au moins une ligne de toit 51, 52 décrivant une arête 12 du toit 10 du bâtiment 1 ; le résultat de cette projection 152 est tel qu'illustré pour l'exemple sur la figure 11B,
- pour chaque paire d'images épipolaires 20, 30, une mise en corrélation 153 deux à deux entre sommets des polygones bidimensionnels 41 et 42 et/ou entre extrémités des lignes de toit 51 et 52 tels que projetés sur les images épipolaires 20, 30 de la paire, et
- pour chaque mise en corrélation 153, une détermination 154 d'un déplacement entre sommets mis en corrélation et/ou entre extrémités mises en corrélation,
- Une détermination 155 de l'élévation de chaque sommet dudit polygone bidimensionnel 41, 42 et/ou de chaque extrémité de ladite au moins une ligne de toit 51, 52, en fonction du déplacement correspondant précédemment déterminé.

La figure 11A illustre, par une flèche, le déplacement déterminé 154 entre deux extrémités d'une même ligne de toit mises en corrélation 153 entre elles. C'est ce déplacement qui permet, grâce à la fonction stéréoscopique, de déterminer l'élévation associée auxdites extrémités mises en corrélation.

Comme susmentionné, l'espace de recherche de chaque corrélation peut avantageusement être réduit dans l'espace épipolaire.

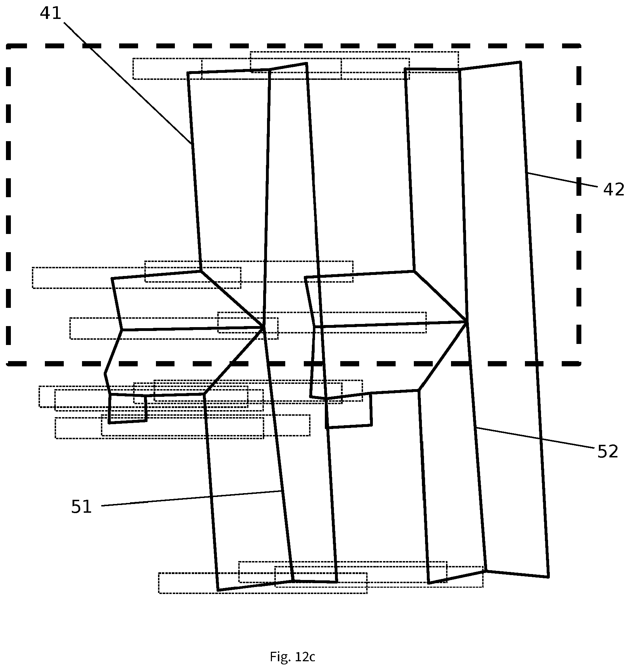

Une première méthode de réduction de l'espace de recherche d'une corrélation vient lorsque la mise en corrélation 153 entre sommets des polygones bidimensionnels 41 et 42 et/ou entre extrémités des lignes de toit 51 et 52 tels que projetés sur les images épipolaires 20, 30 de la paire comprend une limitation, sur une image épipolaire 30 de la paire, de l'espace de recherche de chaque corrélation à un ensemble restreint de lignes de pixels ou de points autour de, voire centré sur, la ligne de pixels ou de points comprenant le sommet du polygone bidimensionnel 41 et/ou l'extrémité de la ligne de toit 51 à mettre en corrélation 153 avec un sommet du polygone bidimensionnel 42 et/ou une extrémité de la ligne de toit 52 tel que projeté sur l'autre image épipolaire 20 de la paire. La largeur des rectangles en tirets représentés sur la figure 12C illustre l'espace de recherche qui, pour une corrélation recherchée, est restreint à un ensemble de lignes de pixels ou de points. Par exemple, chaque ensemble peut comprendre entre deux et cinq lignes de pixels ou de points. Par un autre exemple, l'espace de recherche pourrait être limité à la seule ligne de pixels ou de points comprenant le sommet du polygone bidimensionnel 41 et/ou l'extrémité de la ligne de toit 51 que l'on cherche à corréler ; le passage dans l'espace épipolaire correspondrait dans ce cas à un passage, d'un espace de recherche bidimensionnel sur les images stéréoscopiques 2, 3, à un espace unidimensionnel correspondant à ladite seule ligne de pixels ou de points. Toutefois, considérer que chaque ensemble restreint de lignes de pixels ou de points comprenne entre deux et cinq lignes de pixels ou de points, respectivement, permet d'augmenter la robustesse du procédé 100 selon le premier aspect de l'invention.

Une deuxième méthode de réduction de l'espace de recherche est permise par l'usage susmentionné de la carte de disparité 2030 précédemment construite 172.

En effet, dans ce cas, le procédé 100 selon le premier aspect de l'invention peut comprendre en outre, après la détermination 154 du déplacement entre lesdits sommets correspondants entre eux et/ou entre lesdites extrémités correspondantes entre elles, un contrôle 155 des corrélations précédemment établies pour permettre de déterminer, parmi d'éventuelles multiples correspondances entre sommets et/ou entre extrémités identifiées dans une image épipolaire 30 de la paire pour un même sommet et/ou une même extrémité de l'autre image épipolaire 20 de la paire, celle qui minimise la différence entre une valeur de disparité d'un pixel de la carte de disparité 2030 correspondant audit même sommet et/ou ladite même extrémité et les déplacements précédemment déterminés correspondants auxdites éventuelles multiples correspondances. La longueur des rectangles en tirets représentés sur la figure 12C illustre l'espace de recherche qui, pour une corrélation recherchée, est réduite relativement à la longueur totale des lignes des pixels ou des points de l'image. En effet, si la carte de disparité 2030 n'est pas construite 170, une approche moins performante aurait été de rechercher la corrélation considérée sur toute la ligne de pixels ou de points ou sur toutes les lignes de pixels ou de points d'un ensemble de lignes définissant un espace de recherche restreint selon la première méthode de réduction décrite ci-dessus. La recherche de chaque corrélation peut ainsi être optimisée en utilisant la carte de disparité qui permet d'avoir une approximation de la position d'un pixel ou d'un point de l'image stéréoscopique 2 dans l'autre image stéréoscopique 3 de la paire. Ainsi, la longueur de chacun des rectangles en tirets représentés sur la figure 12C est directement proportionnelle à la valeur de disparité du pixel représentant ou contenant le sommet et/ou l'extrémité que l'on cherche à mettre en corrélation 153. Pour déterminer la valeur de disparité à considérer sur la carte de disparité et pour un sommet et/ou une extrémité donnée, il est possible de projeter l'ensemble p = {(ppx,ppy)} définissant le polygone bidimensionnel 41 (ou 42) et/ou l'ensemble des couples de coordonnées Images {(px1,py1),(px2,py2)} définissant les lignes de toit 51 (ou 52) sur la carte de disparité 2030, comme cela est illustré sur la figure 12B.

La figure 12C illustre, pour chaque corrélation parmi un ensemble de corrélations à établir, l'espace de recherche tel que réduit en mettant en oeuvre les deux solutions de réduction de l'espace de recherche décrites ci-dessus. Notons ici que chacune des deux méthodes de réduction de l'espace de recherche de chaque corrélation peut être implémentée indépendamment de l'autre, et en alternative ou en combinaison avec l'autre.

Par ailleurs, en complément ou en alternative à une implémentation de l'une et/ou l'autre des méthodes de réduction de l'espace de recherche de chaque corrélation, la mise en corrélation 153 entre sommets des polygones bidimensionnels 41 et 42 et/ou entre extrémités des lignes de toit 51 et 52 tels que projetés sur les images épipolaires 20, 30 de la paire, peut comprendre l'implémentation d'une fonction de contraintes d'unicité et d'ordre :
- entre sommets du polygone bidimensionnel 41 tel que projetés sur la première image épipolaire 20 de la paire et sommets du polygone bidimensionnel 42 tel que projetés sur la deuxième image épipolaire 30 de la paire, qui sont situés, dans les deux images épipolaires 20, 30, sensiblement sur une même ligne de pixels ou de points et/ou
- entre extrémités de ligne de toit 51 telle que projetées sur la première image épipolaire 20 de la paire et extrémités de ligne de toit 52 telle que projetées sur la deuxième image épipolaire 30 de la paire, qui sont situées, dans les deux images épipolaires 20, 30, sensiblement sur une même ligne de pixels ou de points.

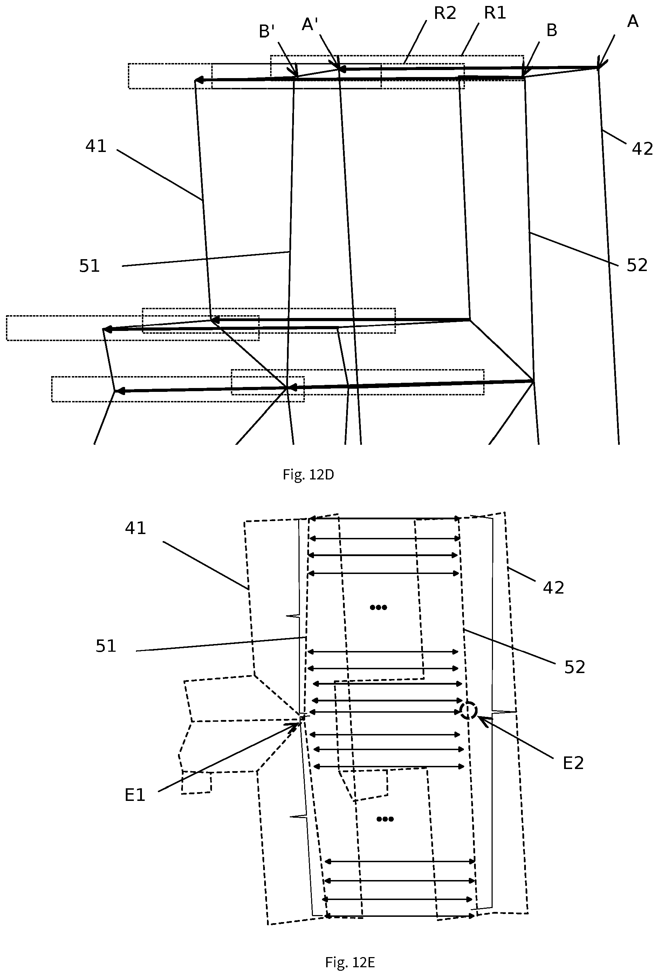

La figure 12D illustre, par les différentes flèches qui sont représentées, autant d'exemples d'implémentation de ladite fonction de contraintes d'unicité et d'ordre. Plus particulièrement, on observe sur cette figure que l'espace de recherche référencé R1 et l'espace de recherche référencé R2 comprennent chacun deux sommets du polygone bidimensionnel 41 ou extrémités de lignes de toit 51. Dès lors, en cherchant à mettre en corrélation 153 le sommet référencé A du polygone bidimensionnel 42 avec un sommet du polygone bidimensionnel 41 et en cherchant à mettre en corrélation 153 le sommet référencé B du polygone bidimensionnel 42 avec un sommet du polygone bidimensionnel 41, deux solutions référencées A' et B' pourraient être envisagées pour chacun ; et ladite fonction de contraintes d'unicité et d'ordre permet de déterminer laquelle des deux solutions retenir pour chacune des mises en corrélation 153 des sommets A et B. En effet, grâce à la fonction de contraintes d'unicité et d'ordre, le sommet A tout en haut à droite de la figure est à associer au premier sommet rencontré dans l'espace de recherche R1, c'est-à-dire le sommet référencé A', et le sommet B, c'est-à-dire le deuxième sommet rencontré en parcourant le polygone bidimensionnel 42 vers le bas et vers la gauche depuis le sommet référencé A, est à associer au deuxième sommet rencontré dans l'espace de recherche R2, c'est-à-dire le sommet référencé B'. Les flèches reliant les sommets A et A' et les sommets B et B' illustrent donc bien des exemples d'implémentations de la fonction de contraintes d'unicité et d'ordre permettant de lever tout doute quant à la mise en corrélation 153 à réaliser lorsque plusieurs solutions sont envisageables malgré la réduction des espaces de recherche. Ainsi, dans l'éventualité où plusieurs correspondances seraient identifiées, le procédé permet une discrimination entre les multiples candidats, et gagne encore en robustesse.

La corrélation entre deux variables, ici les sommets des polygones bidimensionnels 41 et 42 ou les extrémités lignes de toit 51 et 52 entre deux images stéréoscopiques d'une paire est la relation qui « contredit leur indépendance ». Dans le cas présent, la relation qui lie lesdits sommets et lesdites extrémités entre deux images i et j pour chaque sommet et/ou chaque extrémité (px,py) est donnée par la fonction du modèle géométrique :
f_img_to_world(rpci,pxi,pyi,z)= f_img_to_world(rpcj,pxj,pyj,z), z étant une inconnue qui représente l'élévation de ce sommet et/ou de cette extrémité.

Comme l'élévation z est une inconnue, une solution pour optimiser cette corrélation est de minimiser une fonction pour l'ensemble des sommets et/ou extrémités.

Nous listons ci-après trois fonctions de minimisation sous contraintes en fonction des données d'entrée :
- Sans carte de disparité 2030 en entrée, la corrélation des sommets et/ des extrémités minimise, pour l'ensemble des sommets et/ des extrémités, la somme des élévations, min(Σ|z|), sous contraintes d'unicité et d'ordre :
   ▪ La contrainte d'unicité signifie qu'un seul sommet et/ou une seule extrémité (pxi,pyi) peut être relié à un seul sommet et/ou une seule extrémité (pxj,pyj), et vice-versa.
   ▪ La contrainte d'ordre (Cf. figure 12D) signifie que, si pxi est relié à pxj alors si pxi < pxi' et pxi' est relié à pxj' on a pxj< pxj' dans le repère épipolaire.
- Avec la carte de disparité 2030 en entrée, il est possible de minimiser, pour l'ensemble des sommets et/ou des extrémités, la différence entre une valeur de disparité d'un pixel de la carte de disparité 2030 correspondant aux sommets et/ou aux extrémités considérés et le déplacement entre lesdits sommets et/ou lesdites extrémités (min(Σ |(pxi-pxj)-(disp_pxi_pyi)|)) sous contraintes d'unicité et d'ordre où disp_pxi_pyi est la disparité au pixel (px,py) dans l'image i dans le repère épipolaire.
- Dans le cadre d'un nombre d'image supérieure ou égal à trois, {i,j,k,...n}, nous avons pour chaque sommet et pour chaque couple d'image possible :
   ▪ f_img_to_world(rpci,pxi,pyi,z)= f_img_to_world(rpcj,pxj,pyj,z)
   ▪ f_img_to_world(rpci,pxi,pyi,z')= f_img_to_world(rpck,pxk,pyk,z')
   ▪ ....
   ▪ f_img_to_world(rpcj,pxj,pyj,z")= f_img_to_world(rpck,pxk,pyk,z"), et
dans ce cadre-là, il est possible de minimiser la somme des différences entre élévations pour chaque sommet et/ou extrémité et pour chaque couple d'images (min(Σ| |z-z'|+...+|z-z"| +...+|z'-z"|)).

De préférence, la mise en corrélation 153 entre sommets des polygones bidimensionnels 41 et 42 et/ou entre extrémités des lignes de toit 51 et 52 tels que projetés sur les images épipolaires 20, 30 de la paire est réalisée, en deux temps, pour ajouter de la robustesse au procédé 100 selon le premier aspect de l'invention, et cela peut être nécessaire lorsque les images 2 et 3 fournies 110 ne sont pas de qualité suffisante, comme ça peut être le cas pour les images satellites ; ainsi, dans un premier temps, les sommets des polygones bidimensionnels 41 et 42 sont mis en corrélation 153 (ce qui peut être suffisant si la détection 130 des pixels 21, 22, 31, 32 représentatifs du contour 11 et des arêtes 12 du toit 10 du bâtiment 1 est sans omission et si la topologie des polygones bidimensionnels 41 et 42 est correcte), et, dans un second temps, les extrémités des lignes de toit 51 et 52 sont mises en corrélation 153.

La réduction de chaque espace de recherche (qui, bien que non obligatoire, amène de la robustesse au procédé 100 et à un temps de calcul optimisé), peut permettre à chaque sommet du polygone bidimensionnel 41 et à chaque extrémité de ligne de toit 51 d'être corrélé, respectivement, à un sommet du polygone bidimensionnel 42 et une extrémité de ligne de toit 52. Si l'image des disparités est très précise la corrélation peut en effet être directe, notamment si seulement un candidat pour la mise en corrélation 153 est visible dans l'espace de recherche réduit associé. Mais, dans les autres cas, pour faciliter la mise en corrélation 153 et augmenter la robustesse du procédé 100 selon le premier aspect de l'invention, des contraintes supplémentaires d'unicité et d'ordre sont avantageusement ajoutées. Dès lors, comme décrit ci-dessus en référence à la figure 12D, s'il existe plusieurs candidats pour la mise en corrélation 153 d'un sommet ou d'une extrémité dans l'espace de recherche (même réduit) :
- La corrélation conservée est celle qui minimise la différence entre la valeur de la disparité et la distance entre les deux sommets dont la mise en corrélation 153 est considérée, et/ou
- Des contraintes d'ordre sont ajoutées qui sont à respecter si des sommets consécutifs ou extrémités consécutives sont alignés sur l'axe y et qu'ils sont visibles sur les projections ; l'ordre sur l'axe x doit être respecté, et/ou
- Les deux extrémités d'une ligne de toit doivent être corrélées aux extrémités d'une ligne de toit correspondante dans l'autre image.

Si la corrélation des sommets des polygones bidimensionnels 41 et 42 n'est pas possible/complète, cela signifie que deux sommets des polygones bidimensionnels 41 et 42 qui devraient être corrélés entre eux ne sont pas alignés dans l'espace de recherche ou que deux extrémités des lignes de toit 51 et 52 qui devraient être corrélées entre elles ne sont pas alignées dans l'espace de recherche. Il est possible de rencontrer ce cas lorsque les images stéréoscopiques 2 et 3 fournies 110 ne sont pas de qualité suffisante, comme ça peut être le cas pour les images satellites. Les étapes ci-dessous décrites du procédé 100 selon le premier aspect de l'invention permettent de résoudre cet éventuel problème.

En référence à la figure 12E, le procédé 100 selon le premier aspect de l'invention peut ainsi avantageusement comprendre en outre, après la mise en corrélation 153 entre sommets des polygones bidimensionnels 41 et 42 et/ou entre extrémités des lignes de toit 51 et 52 tels que projetés sur les images épipolaires 20, 30 de la paire :
- La vérification que chaque sommet dudit polygone bidimensionnel 41 et/ou chaque extrémité de ladite au moins une ligne de toit 51 d'une première image épipolaire 20 de la paire a été mis en corrélation 153 avec un sommet dudit polygone bidimensionnel 42 et/ou une extrémité de ladite au moins une ligne de toit 52 de la seconde image épipolaire 30 de la paire,
- Si un sommet dudit polygone bidimensionnel 41 et/ou une extrémité E1 de ladite au moins une ligne de toit 51 de ladite première image épipolaire 20 n'a pas été mis en corrélation 153 avec un sommet dudit polygone bidimensionnel 42 et/ou une extrémité E2 de ladite au moins une ligne de toit 52 de ladite seconde image épipolaire 30 :
   ▪ Une discrétisation du côté dudit polygone bidimensionnel 41 et/ou de ladite au moins une ligne de toit 51 qui, sur la première image épipolaire 20, comprend le sommet et/ou l'extrémité n'ayant pas été mis en corrélation, puis
   ▪ Une discrétisation du côté dudit polygone bidimensionnel 42 et/ou de ladite au moins une ligne de toit 52 qui, sur la seconde image épipolaire 30, correspond au côté dudit polygone bidimensionnel 41 précédemment discrétisé et/ou à ladite au moins une ligne de toit 51 précédemment discrétisée, respectivement,
   les discrétisations se correspondant entre elles en termes de nombres de points de discrétisation et de distances entre points de discrétisation successifs dans une direction perpendiculaire aux lignes de pixels ou de points, et
- Une mise en corrélation 1530 de chaque point de discrétisation sur la première image épipolaire 20 avec un point de discrétisation sur la seconde image épipolaire 30.

La figure 12E montre un exemple de la problématique susmentionnée où, sur une des lignes de toit 52, une extrémité E2 n'est pas présente. Cependant, sur la ligne de toit 51, ce sommet E1 est présent. Pour résoudre ce type de problème, la solution décrite ci-dessus consiste à corréler entre elles les lignes de toit 51 et 52 concernées. L'idée de base pour implémenter cette corrélation entre les lignes de toit 51 et 52 est de calculer une corrélation dite continue (intégrale) entre ces deux lignes de toit. Pour cela, on peut estimer cette corrélation en discrétisant chaque ligne de toit 51 et 52 avec un certain nombre de points dits de discrétisation. La corrélation finale sera la fusion des corrélations point-point 1530. Cette mise en corrélation point-point 1530 peut être implémentée de la même façon que la corrélation 153 entre sommets décrite précédemment. En référence à la figure 1, suite à la détermination 150 de la coordonnée Monde de chaque sommet de chaque polygone bidimensionnel 41, 42 et/ou de chaque extrémité de chaque ligne de toit 51, 52, le procédé 100 selon le premier aspect de l'invention comprend la reconstruction 160 du modèle tridimensionnel 6 du toit 10 dudit au moins un bâtiment 1 à partir des coordonnées Monde précédemment déterminées.

La reconstruction 160 du modèle tridimensionnel 6 du toit 10 du bâtiment 1 peut comprendre, pour au moins une des images stéréoscopiques, voire pour chaque image stéréoscopique, la construction d'un ensemble d'au moins un polygone tridimensionnel 61 par projection dans un repère orthonormé des coordonnées Monde précédemment déterminées 150.

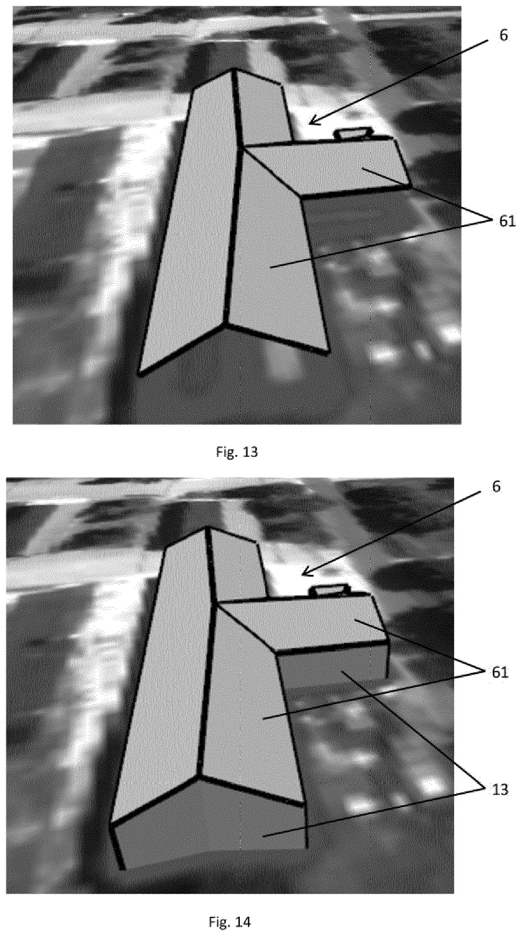

Ainsi, en entrée de l'étape de reconstruction 160, nous avons, pour chaque image 2, 3, un ensemble de lignes de toit dans la projection Monde avec l'information d'élévation {(wx1,wy1,z1},{wx2,wy2,z2}} pour chaque bâtiment 1 ; et, en sortie de l'étape de reconstruction 160, nous avons, comme illustré sur la figure 13, un ensemble de polygones tridimensionnels 61 dans la projection Monde avec l'information d'élévation {(wx1,wy1,z1},{wx2,wy2,z2}} pour chaque face du toit 10 du bâtiment 1.

La reconstruction des polygones tridimensionnels 61 des toits 10 des bâtiments 1 dans le système de coordonnée Monde peut se déduire de façon directe, par exemple en prenant une ligne de toit 51, 52 déterminée comme référence, dans ce cas on considérera de préférence une ligne de toit issue de l'image stéréoscopique qui présente la prise de vue la plus verticale, car c'est sur cette image que, relativement à l'autre image, les erreurs sont minimisées.

Ainsi, la reconstruction 160 du modèle tridimensionnel 6 du toit 10 du bâtiment 1 peut être basée sur les coordonnées Monde déterminées pour l'image stéréoscopique qui, parmi les images stéréoscopiques de la paire, présente une élévation la plus proche de 90°. Cela est suffisant dans le cas où la détection 130 des pixels 21, 22, 31, 32 représentatifs du contour 11 et des arêtes 12 du toit 10 du bâtiment 1 est précise et sans omission.

Dans les autres cas, ou si nous voulons davantage tirer profit de la chaine de traitement décrite ci-dessus (pour augmenter encore la précision du modèle tridimensionnel reconstruit 160), il est possible de gérer une multitude de paires d'images stéréoscopiques 2, 3, résultant en une multitude correspondante d'ensembles de polygones tridimensionnels 61. Plus particulièrement, un algorithme de fusion peut être appliqué auxdits ensembles de polygones tridimensionnels 61, par exemple à partir d'une référence choisie dans un des ensembles de polygones tridimensionnels 61 et que l'on choisira de préférence parmi l'ensemble de polygones tridimensionnels 61 issu de l'image avec la prise vue la plus verticale, et qui comprend l'ajout des lignes de toit du bâtiment issues des autres images, si une ligne de toit n'est pas présente dans la référence choisie et/ou, à la fin de la fusion :
▪ si une ligne de toit est isolée, c'est à dire que ses deux extrémités ne sont pas jointes à d'autres lignes de toit, la suppression de cette ligne de toit, et/ou
▪ si seulement une extrémité d'une ligne de toit est jointe avec une autre ligne de toit, l'autre extrémité de la ligne de toit est prolongée jusqu'à intersecter une autre ligne de toit.

Ainsi, la reconstruction 160 du modèle tridimensionnel 6 du toit 10 du bâtiment 1 peut être basée sur les coordonnées Monde déterminées pour au moins deux (une paire), de préférence par au moins trois (deux paires), images stéréoscopiques fournies 110 et par fusion entre eux des polygones tridimensionnels 61 de chaque ensemble construit pour chaque image stéréoscopique en prenant comme référence au moins une coordonnée Monde déterminée pour l'image stéréoscopique qui, parmi les images stéréoscopiques fournies 110, présente une élévation la plus proche de 90°. Le cas échéant, ladite fusion comprend l'ajout, à un premier ensemble d'au moins un polygone tridimensionnel 61, de coordonnées Monde présentes dans un autre ensemble d'au moins un polygone tridimensionnel 61 et absentes dudit premier ensemble.

En alternative ou en complément, la reconstruction 160 du modèle tridimensionnel 6 du toit 10 du bâtiment 1 peut comprendre, si des coordonnées Monde telles que précédemment déterminées représentent un segment non joint au reste dudit ensemble d'au moins un polygone tridimensionnel 61, la suppression de ces coordonnées Monde. Ces coordonnées sont alors jugées relatives à un artefact que le procédé 100 permet de traiter de façon simple, par leur suppression.

En alternative ou en complément, la reconstruction 160 du modèle tridimensionnel 6 du toit 10 du bâtiment 1 peut comprendre, si des coordonnées Monde telles que précédemment déterminées représentent un segment joint par une seule de ses deux extrémités au reste dudit ensemble d'au moins un polygone tridimensionnel 61, le prolongement dudit segment par son extrémité non jointive jusqu'à une première intersection avec un côté d'un polygone tridimensionnel 61 de l'ensemble.

En référence à la figure 1, et comme illustré sur la figure 14, la reconstruction 160 du modèle tridimensionnel 6 du toit 10 du bâtiment 1 peut comprendre en outre une reconstruction 161 des façades 13 du bâtiment 1 en fonction d'un Modèle Numérique de Terrain (MNT, Cf. figure 4) construit à partir :
- d'un masque du bâtiment 1 et d'éventuels autres objets photographiés, le masque ayant été extrait d'au moins une des images stéréoscopiques par un modèle d'apprentissage, de préférence dit profond, dédié, et
- d'au moins un Modèle Numérique de Surface (MNS, Cf. figure 4) construit à partir d'au moins une carte de disparité 2030 telle qu'introduite ci-dessus.

Plus particulièrement, la reconstruction 161 des façades 13 du bâtiment 1 peut être réalisée par extrusion de polygone à plusieurs solutions. Une solution est que, pour chaque côté de chaque polygone tridimensionnel 61, un nouveau polygone soit construit qui contient ledit côté et son prolongement au niveau du sol, l'élévation du sol étant donnée par le Modèle Numérique de Terrain.

En référence à la figure 1, la reconstruction 160 du modèle tridimensionnel 6 du toit 10 du bâtiment 1 selon le procédé 100 peut comprendre en outre une simplification en plan 162 d'au moins un ensemble d'au moins un polygone tridimensionnel 61 précédemment construit ou d'un ensemble d'au moins un polygone tridimensionnel 61 construit par fusion entre eux des polygones tridimensionnels 61 de chaque ensemble construit pour différentes paires d'images stéréoscopiques.

Pour régulariser le toit de chaque bâtiment tel que reconstruit 160, une des solutions envisageables est en effet de rendre coplanaire chaque face du toit du bâtiment. Cela revient à estimer le plan de chaque face, puis de reconstruire les connectivités par exemple par intersection de plans. Cette étape est significativement simplifiée du fait que les polygones tridimensionnels 61 sont déjà des représentations très simplifiés relativement aux modèles tridimensionnels de l'état de la technique.

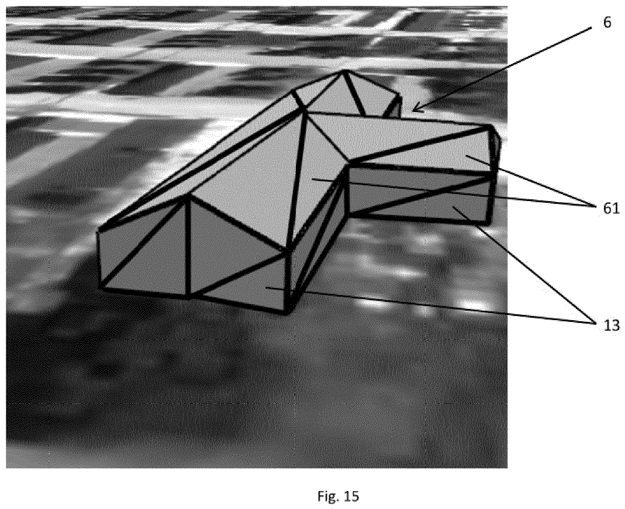

En référence à la figure 1, et comme illustré sur la figure 15, la reconstruction 160 du modèle tridimensionnel 6 du toit 10 du bâtiment 1 selon le procédé 100 peut comprendre en outre une triangulation 163 d'au moins une face d'au moins un polygone tridimensionnel 61 d'au moins un ensemble précédemment construit.

Une représentation classique d'un bâtiment en trois dimensions, notamment en vue de leur texturation, est une représentation sous forme d'un maillage. L'étape de triangulation 163 peut se faire de façon optimum et compressée car le nombre de triangles produits à partir des polygones tridimensionnels 61 tels que reconstruits 160 est minime ; ils sont limités à ceux nécessaires à relier les sommets des polygones tridimensionnels 61 entre eux. Par rapport à de nombreux travaux où la triangulation provient d'un nuage de point ou d'un Modèle Numérique de Surface, la triangulation 163 réalisée sur les polygones tridimensionnels 61 tels que reconstruits 160 est très compressée en termes de nombre de triangles et/ou de nombre de points à considérer.

Il ressort clairement de la description qui précède que le procédé 100 selon le premier aspect de l'invention constitue une chaine de traitement automatique et robuste pour la reconstruction de modèles de bâtiments en 3D depuis l'analyse d'images acquises par télédétection, par exemple par satellite(s). Comprenant la vectorisation du contour et des éventuelles arêtes du toit de chaque bâtiment photographié, il permet de fournir un résultat conforme à la norme LOD2 :
- en nécessitant des capacités numériques de traitement et de stockage moindres que les solutions de l'état de la technique, en particulier lorsque celles-ci ont recours à un nuage de points, ou
- sans reposer sur l'extraction, depuis les images, d'une pluralité d'informations sémantiques dont la fiabilité dépend fortement de la qualité des images.

L'invention n'est pas limitée aux modes de réalisations précédemment décrits.

## Revendications

1. Procédé de reconstruction (100) d'un modèle tridimensionnel (6) d'un toit (10) d'au moins un bâtiment (1) par analyse d'images acquises par télédétection, le procédé (100) comprenant les étapes suivantes :
• Fournir (110) au moins une paire d'images stéréoscopiques (2, 3) représentant chacune le toit (10) dudit au moins un bâtiment (1).
• Fournir (120), pour chaque image stéréoscopique (2, 3) de la paire, des données associées à ladite image, lesdites données définissant, pour chaque paire d'images stéréoscopiques, une fonction dite stéréoscopique permettant une déduction d'une élévation d'une coordonnée Monde, si une coordonnée Image d'un pixel ou d'un point de l'image correspondant à la coordonnée Monde considérée est connue dans chacune des images de la paire.
• Détecter (130), dans chaque image stéréoscopique (2, 3) de la paire, des pixels (21, 22, 31, 32) représentatifs d'un contour (11) et d'éventuelles arêtes (12) du toit (10) dudit au moins un bâtiment (1).
• Par vectorisation des pixels (21, 22, 31, 32) précédemment détectés, déterminer (140), dans chaque image stéréoscopique (2, 3) de la paire, au moins un polygone bidimensionnel (41, 42) décrivant le contour (11) du toit (10) dudit au moins un bâtiment (1) et au moins une ligne dite de toit (51, 52) décrivant une éventuelle arête (12) du toit (10) dudit au moins un bâtiment (1).
• Déterminer (150) la coordonnée Monde de chaque sommet de chaque polygone bidimensionnel (41, 42) précédemment déterminé et/ou de chaque extrémité de chaque ligne de toit (51, 52) précédemment déterminée par implémentation de ladite fonction stéréoscopique, l'étape de détermination (150) étant basée sur la corrélation, entre au moins deux images, des sommets du polygone bidimensionnel (41, 42) et/ou des extrémités des lignes de toit (51, 52), et
• Reconstruire (160) le modèle tridimensionnel (6) du toit (10) dudit au moins un bâtiment (1) à partir des coordonnées Monde précédemment déterminées.

2. Procédé (100) selon la revendication précédente, dans lequel la détection (130), dans chaque image stéréoscopique (2, 3) de la paire, des pixels (21, 22, 31, 32) représentatifs d'un contour (11) et d'éventuelles arêtes (12) du toit (10) dudit au moins un bâtiment (1) comprend :
• La détection (131), dans chaque image stéréoscopique (2, 3) de la paire, des pixels (21, 22) représentatifs du contour (11) du toit (10) dudit au moins un bâtiment (1), et
• La détection (132), dans chaque image stéréoscopique (2, 3) de la paire, des pixels (31, 32) représentatifs d'éventuelles arêtes (12) du toit (10) dudit au moins un bâtiment (1),
chacune de ces sous-étapes étant mise en œuvre par implémentation d'un modèle d'apprentissage dédié.

3. Procédé (100) selon la revendication précédente, dans lequel la détermination (140), dans chaque image stéréoscopique (2, 3) de la paire, d'au moins un polygone bidimensionnel (41, 42) décrivant le contour (11) du toit (10) dudit au moins un bâtiment (1) et/ou d'au moins une ligne de toit (51, 52) décrivant une éventuelle arête (12) du toit (10) dudit au moins un bâtiment (1) comprend :
• La détermination (141), à partir des pixels (21, 31) représentatifs du contour (11) du toit (10) dudit au moins un bâtiment (1) tels que précédemment détectés et le cas échéant sous au moins une contrainte de régularité d'un ensemble de coordonnées Image des sommets du polygone bidimensionnel (41, 42), et/ou
• La détermination (142), à partir des pixels (22, 32) représentatifs de l'éventuelle arête (12) du toit (10) dudit au moins un bâtiment (1) tels que précédemment détectés :
- dans le cas d'une génération d'un squelette compressé, d'un couple de coordonnées Image d'extrémités de chaque ligne de toit (51, 52), chaque extrémité étant identifiée à un pixel ou un point de l'image détecté comme réalisant une jonction entre au moins deux arêtes (12) du toit (10),
- dans le cas d'une génération d'un squelette non compressé, d'une liste de coordonnées Image définissant un chemin représentatif de chaque ligne de toit (51, 52).

4. Procédé (100) selon la revendication précédente, dans lequel la détermination (140), dans chaque image stéréoscopique (2, 3) de la paire, d'au moins un polygone bidimensionnel (41,42) décrivant le contour (11) du toit (10) dudit au moins un bâtiment (1) et/ou d'au moins une ligne de toit (51, 52) décrivant une éventuelle arête (12) du toit (10) dudit au moins un bâtiment (1) comprend en outre, par bâtiment :
• la détermination (143) d'une première distance minimale entre chaque coordonnée Image des extrémités de chaque ligne de toit (51, 52) du bâtiment considéré et le polygone bidimensionnel (41, 42) décrivant le contour du toit du bâtiment considéré, puis
• la fusion (144) entre un point du polygone bidimensionnel (41, 42) et une coordonnée Image d'une extrémité de ligne de toit (51, 52) qui, sur la base de la première distance minimale précédemment déterminée, respecte un premier critère de proximité prédéterminé avec ledit point, et/ou
• lorsque plusieurs lignes de toit (51, 52) sont à considérer, la détermination (145) d'une deuxième distance minimale entre coordonnées Image des extrémités des lignes de toit (51, 52) considérées deux à deux, puis
• la fusion (146) entre elles des coordonnées Image des extrémités des lignes de toit (51, 52) qui, sur la base de la deuxième distance minimale précédemment déterminée, respectent un deuxième critère de proximité prédéterminé.

5. Procédé (100) selon la revendication précédente, dans lequel la fusion (144) entre le point du polygone bidimensionnel (41, 42) et ladite coordonnée Image d'une extrémité de ligne toit (51, 52) et/ou la fusion (146) entre elles desdites coordonnées Image des extrémités des lignes de toit (51, 52) comprend leur remplacement par une coordonnée Image déterminée en fonction des coordonnées Image à fusionner entre elles, par exemple par une coordonnée Image du barycentre des coordonnées Image à fusionner entre elles.

6. Procédé (100) selon l'une quelconque des revendications précédentes, dans lequel la détermination (150) de la coordonnée Monde de chaque sommet de chaque polygone bidimensionnel (41, 42) précédemment déterminé et/ou de chaque extrémité de chaque ligne de toit (51, 52) précédemment déterminée comprend une extraction (151) de l'élévation de chaque coordonnée Monde à déterminer par corrélation entre elles des images stéréoscopiques (2, 3) de chaque paire.

7. Procédé (100) selon l'une quelconque des revendications précédentes, comprenant, pour chaque image stéréoscopique (2, 3) de la paire, une construction (170), à partir de l'image stéréoscopique considérée, d'une image épipolaire (20, 30), et une détermination (171), à partir des données fournies (120) et associées à chaque paire d'images stéréoscopiques, d'une deuxième fonction stéréoscopique fonctionnelle dans un espace épipolaire associé aux images épipolaires (20, 30) construites à partir des images stéréoscopiques (2, 3) de la paire.

8. Procédé (100) selon la revendication précédente, comprenant, à partir des images épipolaires (20, 30) précédemment construites (170) pour chaque paire d'images stéréoscopiques (2, 3), une construction (172) d'une carte de disparité (2030).

9. Procédé (100) selon les revendications 6 et 7, et le cas échéant selon la revendication 8, dans lequel l'extraction (151) de l'élévation de chaque coordonnée Monde à déterminer par corrélation entre elles des images stéréoscopiques (2, 3) de chaque paire comprend, pour chaque bâtiment :
• pour chaque image épipolaire (20, 30), une projection (152), sur l'image épipolaire considérée et selon la deuxième fonction stéréoscopique fonctionnelle dans l'espace épipolaire, du polygone bidimensionnel (41, 42) décrivant le contour (11) du toit (10) du bâtiment (1) considéré et/ou de ladite au moins une ligne de toit (51, 52) décrivant une éventuelle arête (12) du toit (10) du bâtiment (1) considéré,
• pour chaque paire d'images épipolaires (20, 30), une mise en corrélation (153) deux à deux entre sommets dudit polygone bidimensionnel (41, 42) et/ou entre extrémités de ladite au moins une ligne de toit (51, 52) tels que projetés sur les images épipolaires (20, 30) de la paire, et
• pour chaque mise en corrélation (153), une détermination (154) d'un déplacement entre sommets mis en corrélation et/ou entre lesdites extrémités mises en corrélation,
• une détermination (155) de l'élévation de chaque sommet dudit polygone bidimensionnel (41, 42) et/ou de chaque extrémité de ladite au moins une ligne de toit (51, 52), en fonction du déplacement correspondant précédemment déterminé.

10. Procédé (100) selon la revendication précédente, dans lequel la mise en corrélation (153) entre sommets dudit polygone bidimensionnel (41, 42) et/ou entre extrémités de ladite au moins une ligne de toit (51, 52) tels que projetés sur les images épipolaires (20, 30) de la paire, comprend une limitation, dans l'espace épipolaire et sur une image épipolaire (30) de la paire, d'un espace de recherche de chaque corrélation à un ensemble restreint de lignes de pixels ou de points de l'image autour de, voire centré sur, la ligne de pixels ou de points comprenant le sommet du polygone bidimensionnel (41) et/ou l'extrémité de la ligne de toit (51) à mettre en corrélation (153) avec un sommet du polygone bidimensionnel (42) et/ou une extrémité de la ligne de toit (52) tel que projeté sur l'autre image épipolaire (20) de la paire.

11. Procédé (100) selon l'une quelconque des deux revendications précédentes et la revendication 8, dans lequel la mise en corrélation (153) entre sommets dudit polygone bidimensionnel (41, 42) et/ou entre extrémités de ladite au moins une ligne de toit (51, 52) tels que projetés sur les images épipolaires (20, 30) de la paire, comprend une limitation de l'espace de recherche, dans l'espace épipolaire et sur une image épipolaire (30) de la paire, par obtention, à partir de la carte de disparité (2030), d'une première approximation du déplacement entre pixels ou entre points correspondants entre eux dans les images épipolaires (20, 30) de la paire.

12. Procédé (100) selon l'une quelconque des trois revendications précédentes et la revendication 8, comprenant en outre, après la détermination (154) du déplacement entre lesdits sommets correspondants entre eux et/ou entre lesdites extrémités correspondantes entre elles, un contrôle (155) des corrélations précédemment établies pour permettre de déterminer, parmi d'éventuelles multiples correspondances entre sommets et/ou entre extrémités identifiées dans une image épipolaire (30) de la paire pour un même sommet et/ou une même extrémité de l'autre image épipolaire (20) de la paire, celle qui minimise la différence entre une valeur de disparité d'un pixel de la carte de disparité (2030) correspondant audit même sommet et/ou ladite même extrémité et les déplacements précédemment déterminés correspondants auxdites éventuelles multiples correspondances.

13. Procédé (100) selon l'une quelconque des trois revendications précédentes, dans lequel la mise en corrélation (153) entre sommets des polygones bidimensionnels (41 et 42) et/ou entre extrémités des lignes de toit (51 et 52) tels que projetés sur les images épipolaires (20, 30) de la paire, comprend l'implémentation d'une fonction de contraintes d'unicité et d'ordre :
• entre sommets du polygone bidimensionnel (41) tel que projeté sur la première image épipolaire (20) de la paire et sommets du polygone bidimensionnel (42) tel que projeté sur la deuxième image épipolaire (30) de la paire, qui sont situés, dans les deux images épipolaires (20, 30), sensiblement sur une même ligne de pixels ou de points, et/ou, de préférence puis,
• entre extrémités de ladite au moins une ligne de toit (51) telle que projetée sur la première image épipolaire (20) de la paire et extrémités de ladite au moins une ligne de toit (52) telle que projetée sur la deuxième image épipolaire (30) de la paire, qui sont situées, dans les deux images épipolaires (20, 30), sensiblement sur une même ligne de pixels ou de points.

14. Procédé (100) selon l'une quelconque des quatre revendications précédentes, comprenant en outre, après la mise en corrélation (153) entre sommets dudit polygone bidimensionnel (41, 42) et/ou entre extrémités de ladite au moins une ligne de toit (51, 52) tels que projetés sur les images épipolaires (20, 30) de la paire :
• La vérification que chaque sommet dudit polygone bidimensionnel (41) et/ou chaque extrémité de ladite au moins une ligne de toit (51) d'une première image épipolaire (20) de la paire a été mis en corrélation (153) avec un sommet dudit polygone bidimensionnel (42) et/ou une extrémité de ladite au moins une ligne de toit (52) de la seconde image épipolaire (30) de la paire,
• Si un sommet dudit polygone bidimensionnel (41) et/ou une extrémité de ladite au moins une ligne de toit (51) de ladite première image épipolaire (20) n'a pas été mis en corrélation (153) avec un sommet dudit polygone bidimensionnel (42) et/ou une extrémité de ladite au moins une ligne de toit (52) de ladite seconde image épipolaire (30) :
- Une discrétisation du côté dudit polygone bidimensionnel (41) et/ou de ladite au moins une ligne de toit (51) qui, sur la première image épipolaire (20), comprend le sommet et/ou l'extrémité n'ayant pas été mis en corrélation, puis
- Une discrétisation du côté dudit polygone bidimensionnel (42) et/ou de ladite au moins une ligne de toit (52) qui, sur la seconde image épipolaire (30), correspond au côté dudit polygone bidimensionnel (41) précédemment discrétisé et/ou à ladite au moins une ligne de toit (51) précédemment discrétisée, respectivement,
les discrétisations se correspondant entre elles en termes de nombres de points de discrétisation et de distances entre points de discrétisation successifs dans une direction perpendiculaire aux lignes de pixels, et
• Une mise en corrélation (1530) de chaque point de discrétisation sur la première image épipolaire (20) avec un point de discrétisation sur la seconde image épipolaire (30).

15. Procédé (100) selon l'une quelconque des quatre revendications précédentes, dans lequel la reconstruction (160) du modèle tridimensionnel (6) du toit (10) dudit au moins un bâtiment (1) comprend, pour au moins une des images stéréoscopiques (2, 3), voire pour chaque image stéréoscopique, la construction (161) d'un ensemble d'au moins un polygone tridimensionnel (61) par projection dans un repère orthonormé des coordonnées Monde précédemment déterminées.

16. Produit programme d'ordinateur comprenant des instructions, qui lorsqu'elles sont effectuées par au moins un processeur, exécute les étapes du procédé (100) selon l'une quelconque des revendications précédentes.

## Patentansprüche

1. Verfahren (100) zur Rekonstruktion eines dreidimensionalen Modells (6) eines Daches (10) mindestens eines Gebäudes (1) durch Analyse von per Ferndetektion erfassten Bildern, wobei das Verfahren (100) die folgenden Schritte umfasst:
• Bereitstellen (110) von mindestens einem Paar stereoskopischer Bilder (2, 3), die jeweils das Dach (10) des mindestens einen Gebäudes (1) darstellen.
• Bereitstellen (120), für jedes stereoskopische Bild (2, 3) des Paares, von Daten, die dem Bild zugeordnet sind, wobei die Daten für jedes Paar stereoskopischer Bilder eine sogenannte stereoskopische Funktion definieren, die eine Ableitung einer Höhe einer Weltkoordinate ermöglicht, wenn in jedem der Bilder des Paares eine Bildkoordinate eines Pixels oder eines Punktes des Bildes bekannt ist, die der betrachteten Weltkoordinate entspricht.
• Detektieren (130) von Pixeln (21, 22, 31, 32), die eine Kontur (11) und eventuelle Kanten (12) des Daches (10) des mindestens einen Gebäudes (1) darstellen, in jedem stereoskopischen Bild (2, 3) des Paares.
• durch Vektorisierung der zuvor detektierten Pixel (21, 22, 31, 32), Bestimmen (140), in jedem stereoskopischen Bild (2, 3) des Paares, mindestens eines zweidimensionalen Polygons (41, 42), das die Kontur (11) des Daches (10) des mindestens einen Gebäudes (1) beschreibt, und mindestens einer sogenannten Dachlinie (51, 52), die eine eventuelle Kante (12) des Daches (10) des mindestens einen Gebäudes (1) beschreibt.
• Bestimmen (150) der Weltkoordinate jedes Scheitelpunktes jedes zuvor bestimmten zweidimensionalen Polygons (41, 42) und/oder jedes Endes jeder zuvor bestimmten Dachlinie (51, 52) durch Implementierung der stereoskopischen Funktion, wobei der Bestimmungsschritt (150) auf der Korrelation zwischen mindestens zwei Bildern der Scheitelpunkte des zweidimensionalen Polygons (41, 42) und/oder der Enden der Dachlinien (51, 52) basiert, und
• Rekonstruieren (160) des dreidimensionalen Modells (6) des Daches (10) des mindestens einen Gebäudes (1) ausgehend von den zuvor bestimmten Weltkoordinaten.

2. Verfahren (100) nach dem vorhergehenden Anspruch, wobei das Detektieren (130), in jedem stereoskopischen Bild (2, 3) des Paares, von Pixeln (21, 22, 31, 32), die eine Kontur (11) und eventuelle Kanten (12) des Daches (10) des mindestens einen Gebäudes (1) darstellen, Folgendes umfasst:
• Detektieren (131), in jedem stereoskopischen Bild (2, 3) des Paares, von Pixeln (21, 22), die die Kontur (11) des Daches (10) des mindestens einen Gebäudes (1) darstellen, und
• Detektieren (132), in jedem stereoskopischen Bild (2, 3) des Paares, von Pixeln (31, 32), die eventuelle Kanten (12) des Daches (10) des mindestens einen Gebäudes (1) darstellen,
wobei jeder dieser Teilschritte durch die Implementierung eines speziellen Lernmodells umgesetzt wird.

3. Verfahren (100) nach dem vorhergehenden Anspruch, wobei das Bestimmen (140), in jedem stereoskopischen Bild (2, 3) des Paares, mindestens eines zweidimensionalen Polygons (41, 42), das die Kontur (11) des Daches (10) des mindestens einen Gebäudes (1) beschreibt, und/oder mindestens einer Dachlinie (51, 52), die eine eventuelle Kante (12) des Daches (10) des mindestens einen Gebäudes (1) beschreibt, Folgendes umfasst:
• Bestimmen (141), ausgehend von den zuvor detektierten Pixeln (21, 31), die die Kontur (11) des Daches (10) des mindestens einen Gebäudes (1) darstellen, und gegebenenfalls unter mindestens einer Regelmäßigkeitsbedingung für einen Satz von Bildkoordinaten der Scheitelpunkte des zweidimensionalen Polygons (41, 42), und/oder
• Bestimmen (142), ausgehend von den wie zuvor detektierten Pixeln (22, 32), die die eventuelle Kante (12) des Daches (10) des mindestens einen Gebäudes (1) darstellen, von Folgendem:
- im Falle einer Generierung eines komprimierten Gerüsts, eines Paares von Bildkoordinaten der Enden jeder Dachlinie (51, 52), wobei jedes Ende mit einem Pixel oder einem Punkt des Bildes identifiziert wird, der als Verbindungspunkt zwischen mindestens zwei Kanten (12) des Daches (10) detektiert wird,
- im Falle einer Generierung eines nicht komprimierten Gerüsts, einer Liste von Bildkoordinaten, die einen repräsentativen Pfad jeder Dachlinie (51, 52) definieren.

4. Verfahren (100) nach dem vorhergehenden Anspruch, wobei das Bestimmen (140), in jedem stereoskopischen Bild (2, 3) des Paares, mindestens eines zweidimensionalen Polygons (41, 42), das die Kontur (11) des Daches (10) des mindestens einen Gebäudes (1) beschreibt, und/oder mindestens einer Dachlinie (51, 52), die eine eventuelle Kante (12) des Daches (10) des mindestens einen Gebäudes (1) beschreibt, weiter pro Gebäude Folgendes umfasst:
• Bestimmen (143) eines ersten Mindestabstands zwischen jeder Bildkoordinate der Enden jeder Dachlinie (51, 52) des betrachteten Gebäudes und dem zweidimensionalen Polygon (41, 42), das die Dachkontur des betrachteten Gebäudes beschreibt, dann
• Verschmelzen (144) eines Punktes des zweidimensionalen Polygons (41, 42) und einer Bildkoordinate eines Endes der Dachlinie (51, 52), das auf der Grundlage des ersten zuvor bestimmten Mindestabstands ein erstes vorbestimmtes Näherungskriterium mit dem Punkt erfüllt, und/oder
• wenn mehrere Dachlinien (51, 52) zu berücksichtigen sind, das Bestimmen (145) eines zweiten Mindestabstands zwischen den Bildkoordinaten der Enden der jeweils paarweise betrachteten Dachlinien (51, 52), dann
• Verschmelzen (146) der Bildkoordinaten der Enden der Dachlinien (51, 52) untereinander, die auf der Grundlage des zuvor bestimmten zweiten Mindestabstands ein zweites vorbestimmtes Näherungskriterium erfüllen.

5. Verfahren (100) nach dem vorhergehenden Anspruch, wobei das Verschmelzen (144) des Punktes des zweidimensionalen Polygons (41, 42) und der Bildkoordinate eines Endes einer Dachlinie (51, 52) und/oder das Verschmelzen (146) der Bildkoordinaten der Enden der Dachlinien (51, 52) untereinander deren Ersetzen durch eine Bildkoordinate umfasst, die in Abhängigkeit von den Bildkoordinaten bestimmt wird, das miteinander verschmolzen werden sollen, z. B. durch eine Bildkoordinate des Schwerpunktes der Bildkoordinaten, die miteinander verschmolzen werden sollen.

6. Verfahren (100) nach einem der vorhergehenden Ansprüche, wobei das Bestimmen (150) der Weltkoordinate jedes Scheitelpunkts jedes zuvor bestimmten zweidimensionalen Polygons (41, 42) und/oder jedes Endes jeder zuvor bestimmten Dachlinie (51, 52) das Extrahieren (151) der Höhe jeder zu bestimmenden Weltkoordinate durch Korrelation der stereoskopischen Bilder (2, 3) jedes Paares untereinander umfasst.

7. Verfahren (100) nach einem der vorhergehenden Ansprüche, umfassend, für jedes stereoskopische Bild (2, 3) des Paares, das Erstellen (170) eines Epipolarbildes (20, 30) ausgehend von dem betrachteten stereoskopischen Bild und das Bestimmen (171), ausgehend von den bereitgestellten Daten (120), die jedem Paar stereoskopischer Bilder zugeordnet sind, einer zweiten funktionalen stereoskopischen Funktion in einem Epipolarraum, der den Epipolarbildern (20, 30) zugeordnet sind, die anhand der stereoskopischen Bilder (2, 3) des Paares erstellt wurden.

8. Verfahren (100) nach dem vorhergehenden Anspruch, umfassend das Erstellen (172) einer Disparitätskarte (2030) anhand der zuvor erstellten (170) Epipolarbilder (20, 30) für jedes Paar stereoskopischer Bilder (2, 3).

9. Verfahren (100) nach Anspruch 6 und 7, und gegebenenfalls nach Anspruch 8, wobei das Extrahieren (151) der Höhe jeder Weltkoordinate, die durch Korrelation der stereoskopischen Bilder (2, 3) jedes Paares untereinander zu bestimmen ist, für jedes Gebäude Folgendes umfasst:
• für jedes Epipolarbild (20, 30), eine Projizieren (152) des zweidimensionalen Polygons (41, 42), das die Kontur (11) des Daches (10) des betrachteten Gebäudes (1) beschreibt, und/oder der mindestens einen Dachlinie (51, 52), die eine eventuelle Kante (12) des Daches (10) des betrachteten Gebäudes (1) beschreibt, auf das betrachtete Epipolarbild und gemäß der zweiten funktionalen stereoskopischen Funktion in dem Epipolarraum,
• für jedes Paar von Epipolarbildern (20, 30), paarweises Korrelieren (153) zwischen Scheitelpunkten des zweidimensionalen Polygons (41, 42) und/oder zwischen Enden der mindestens einen Dachlinie (51, 52), wie sie auf die Epipolarbilder (20, 30) des Paares projiziert sind, und
• für jede Korrelation (153), Bestimmen (154) einer Verschiebung zwischen den korrelierten Scheitelpunkten und/oder zwischen den korrelierten Enden,
• Bestimmen (155) der Höhe jedes Scheitelpunkts des zweidimensionalen Polygons (41, 42) und/oder jedes Endes der mindestens einen Dachlinie (51, 52) in Abhängigkeit von der zuvor bestimmten entsprechenden Verschiebung.

10. Verfahren (100) nach dem vorhergehenden Anspruch, wobei das Korrelieren (153) zwischen Scheitelpunkten des zweidimensionalen Polygons (41, 42) und/oder zwischen Enden der mindestens einen Dachlinie (51, 52), wie sie auf die Epipolarbilder (20, 30) des Paares projiziert sind, eine Begrenzung, im Epipolarraum und auf einem Epipolarbild (30) des Paares, eines Suchraums für jede Korrelation auf einen begrenzten Satz von Pixel- oder Punktreihen des Bildes um die Pixel- oder Punktreihe herum oder sogar auf diese zentriert, die den Scheitelpunkt des zweidimensionalen Polygons (41) und/oder das Ende der Dachlinie (51) umfasst, die mit einem Scheitelpunkt des zweidimensionalen Polygons (42) und/oder einem Ende der Dachlinie (52) in Korrelation (153) gebracht werden sollen, wie auf das andere Epipolarbild (20) des Paares projiziert, umfasst.

11. Verfahren (100) nach einem der beiden vorhergehenden Ansprüche und Anspruch 8, wobei das Korrelieren (153) zwischen Scheitelpunkten des zweidimensionalen Polygons (41, 42) und/oder zwischen Enden der mindestens einen Dachlinie (51, 52), wie auf die Epipolarbilder (20, 30) des Paares projiziert, eine Begrenzung des Suchraums, in dem Epipolarraum und auf einem Epipolarbild (30) des Paares, durch Erhalten, anhand der Disparitätskarte (2030), einer ersten Annäherung der Verschiebung zwischen Pixeln oder zwischen Punkten, die einander entsprechend, in den Epipolarbildern (20, 30) des Paares umfasst.

12. Verfahren (100) nach einem der drei vorhergehenden Ansprüche und Anspruch 8, weiter umfassend, nach dem Bestimmen (154) der Verschiebung zwischen den einander entsprechenden Scheitelpunkten und/oder zwischen den einander entsprechenden Enden, das Kontrollieren (155) der zuvor erstellten Korrelationen, um es zu ermöglichen, aus möglichen Mehrfachübereinstimmungen zwischen Scheitelpunkten und/oder zwischen Enden, die in einem Epipolarbild (30) des Paares für denselben Scheitelpunkt und/oder dasselbe Ende des anderen Epipolarbildes (20) des Paares identifiziert wurden, diejenigen zu bestimmen, die den Unterschied zwischen einem Disparitätswert eines Pixels der Disparitätskarte (2030), der demselben Scheitelpunkt und/oder demselben Ende entspricht, und den zuvor bestimmten Verschiebungen, die den eventuellen Mehrfachübereinstimmungen entsprechen, minimiert.

13. Verfahren (100) nach einem der drei vorhergehenden Ansprüche, wobei das Korrelieren (153) zwischen Scheitelpunkten der zweidimensionalen Polygone (41 und 42) und/oder zwischen Enden der Dachlinien (51 und 52), wie auf die Epipolarbilder (20, 30) des Paares projiziert, das Implementieren einer Funktion von Eindeutigkeits- und Reihenfolgenbeschränkungen umfasst:
• zwischen Scheitelpunkten des zweidimensionalen Polygons (41), wie auf das erste Epipolarbild (20) des Paares projiziert, und Scheitelpunkten des zweidimensionalen Polygons (42), wie auf das zweite Epipolarbild (30) des Paares projiziert, die sich in den beiden Epipolarbildern (20, 30) im Wesentlichen in derselben Pixel- oder Punktreihe befinden, und/oder, vorzugsweise dann
• zwischen Enden der mindestens eine Dachlinie (51), wie sie auf das erste Epipolarbild (20) des Paares projiziert ist, und Enden der mindestens eine Dachlinie (52), wie sie auf das zweite Epipolarbild (30) des Paares projiziert ist, die sich in den beiden Epipolarbildern (20, 30) im Wesentlichen in derselben Pixel- oder Punktreihe befinden.

14. Verfahren (100) nach einem der vier vorhergehenden Ansprüche, weiter umfassend, nach dem Korrelieren (153) zwischen Scheitelpunkten des zweidimensionalen Polygons (41, 42) und/oder zwischen Enden der mindestens einen Dachlinie (51, 52), wie sie auf die Epipolarbilder (20, 30) des Paares projiziert sind:
• Überprüfen, ob jeder Scheitelpunkt des zweidimensionalen Polygons (41) und/oder jedes Ende der mindestens einen Dachlinie (51) eines ersten Epipolarbildes (20) des Paares mit einem Scheitelpunkt des zweidimensionalen Polygons (42) und/oder einem Ende der mindestens einen Dachlinie (52) des zweiten Epipolarbildes (30) des Paares in Korrelation (153) gebracht wurde,
• wenn ein Scheitelpunkt des zweidimensionalen Polygons (41) und/oder ein Ende der mindestens einen Dachlinie (51) des ersten Epipolarbildes (20) nicht mit einem Scheitelpunkt des zweidimensionalen Polygons (42) und/oder einem Ende der mindestens einen Dachlinie (52) des zweiten Epipolarbildes (30) in Korrelation (153) gebracht wurde:
- eine Diskretisierung auf der Seite des zweidimensionalen Polygons (41) und/oder der mindestens einen Dachlinie (51), die auf dem ersten Epipolarbild (20) den nicht korrelierten Scheitelpunkt und/oder das nicht korrelierte Ende umfasst, dann
- eine Diskretisierung der Seite des zweidimensionalen Polygons (42) und/oder der mindestens einen Dachlinie (52), die auf dem zweiten Epipolarbild (30) der Seite des zuvor diskretisierten zweidimensionalen Polygons (41) und/oder der mindestens einen zuvor diskretisierten Dachlinie (51) entspricht,
wobei die Diskretisierungen in Bezug auf die Anzahl der Diskretisierungspunkte und die Abstände zwischen aufeinanderfolgenden Diskretisierungspunkten in einer Richtung senkrecht zu den Pixellinien einander entsprechen, und
• Korrelieren (1530) jedes Diskretisierungspunktes auf dem ersten Epipolarbild (20) mit einem Diskretisierungspunkt auf dem zweiten Epipolarbild (30).

15. Verfahren (100) nach einem der vier vorhergehenden Ansprüche, wobei das Rekonstruieren (160) des dreidimensionalen Modells (6) des Daches (10) des mindestens einen Gebäudes (1) für mindestens eines der stereoskopischen Bilder (2, 3) oder sogar für jedes stereoskopische Bild das Erstellen (161) eines Satzes aus mindestens einem dreidimensionalen Polygon (61) durch Projektion der zuvor bestimmten Weltkoordinaten in ein orthonormiertes Koordinatensystem umfasst.

16. Computerprogrammprodukt, das Anweisungen umfasst, die, wenn sie von mindestens einem Prozessor ausgeführt werden, mindestens die Schritte des Verfahrens (100) nach einem der vorhergehenden Ansprüche ausführen.

## Claims

1. Method (100) for reconstructing a three-dimensional model (6) of a roof (10) of at least one building (1) by analysing images acquired by remote detection, the method (100) comprising the following steps:
• providing (110) at least one pair of stereoscopic images (2, 3), each representing the roof (10) of said at least one building (1).
• for each stereoscopic image (2, 3) of the pair, providing (120) data associated with said image, said data defining for each pair of stereoscopic images a so-called stereoscopic function allowing deduction of an elevation of a World coordinate if an Image coordinate of a pixel or of a point of the image corresponding to the World coordinate in question is known in each of the images of the pair.
• in each stereoscopic image (2, 3) of the pair, detecting (130) pixels (21, 22, 31, 32) representative of a contour (11) and possible edges (12) of the roof (10) of said at least one building (1).
• by vectorising the previously detected pixels (21, 22, 31, 32), determining (140) in each stereoscopic image (2, 3) of the pair at least one two-dimensional polygon (41, 42) describing the contour (11) of the roof (10) of said at least one building (1) and at least one so-called roof line (51, 52) describing a possible edge (12) of the roof (10) of said at least one building (1).
• determining (150) the World coordinate of each vertex of each previously determined two-dimensional polygon (41, 42) and/or of each end of each previously determined roof line (51, 52) by using said stereoscopic function, the determination step (150) being based on correlation between at least two images of the vertices of the two-dimensional polygon (41, 42) and/or of the ends of the roof lines (51, 52), and
• reconstructing (160) the three-dimensional model (6) of the roof (10) of said at least one building (1) from the previously determined World coordinates.

2. Method (100) according to the preceding claim, wherein the detection (130), in each stereoscopic image (2, 3) of the pair, of pixels (21, 22, 31, 32) representative of a contour (11) and possible edges (12) of the roof (10) of said at least one building (1) comprises:
• in each stereoscopic image (2, 3) of the pair, detecting (131) pixels (21, 22) representative of the contour (11) of the roof (10) of said at least one building (1), and
• in each stereoscopic image (2, 3) of the pair, detecting (132) pixels (31, 32) representative of possible edges (12) of the roof (10) of said at least one building (1),
each of these substeps being carried out by using a dedicated learning model.

3. Method (100) according to the preceding claim, wherein the determination (140), in each stereoscopic image (2, 3) of the pair, of at least one two-dimensional polygon (41, 42) describing the contour (11) of the roof (10) of said at least one building (1) and/or of at least one roof line (51, 52) describing a possible edge (12) of the roof (10) of said at least one building (1) comprises:
• determining (141) from the pixels (21, 31) representative of the contour (11) of the roof (10) of said at least one building (1) as previously detected, and where appropriate under at least one regularity constraint, a set of Image coordinates of the vertices of the two-dimensional polygon (41, 42), and/or
• determining (142) from the pixels (22, 32) representative of the possible edge (12) of the roof (10) of said at least one building (1) as previously detected:
- in the case of a generating a compressed skeleton, a pair of Image coordinates of ends of each roof line (51, 52), each end being identified with a pixel or a point of the image detected as forming a junction between at least two edges (12) of the roof (10),
- in the case of a generating an uncompressed skeleton, a list of Image coordinates defining a path representative of each roof line (51, 52).

4. Method (100) according to the preceding claim, wherein the determination (140), in each stereoscopic image (2, 3) of the pair, of at least one two-dimensional polygon (41, 42) describing the contour (11) of the roof (10) of said at least one building (1) and/or of at least one roof line (51, 52) describing a possible edge (12) of the roof (10) of said at least one building (1) further comprises, per building:
• determining (143) a first minimum distance between each Image coordinate of the ends of each roof line (51, 52) of the building in question and the two-dimensional polygon (41, 42) describing the contour of the roof of the building in question, then
• merging (144) between a point of the two-dimensional polygon (41, 42) and an Image coordinate of an end of a roof line (51, 52), which based on the previously determined first minimum distance complies with a first predetermined criterion of proximity with said point, and/or
• when a plurality of roof lines (51, 52) are to be considered, determining (145) a second minimum distance between Image coordinates of the ends of the roof lines (51, 52) considered two by two, then
• merging (146) with one another Image coordinates of the ends of the roof lines (51, 52), which based on the previously determined second minimum distance comply with a second predetermined proximity criterion.

5. Method (100) according to the preceding claim, wherein the merging (144) between the point of the two-dimensional polygon (41, 42) and said Image coordinate of an end of a roof line (51, 52) and/or the merging (146) with one another of said Image coordinates of the ends of the roof lines (51, 52) comprises replacing them with an Image coordinate determined as a function of the Image coordinates to be merged with one another, for example with an Image coordinate of the centroid of the Image coordinates to be merged with one another.

6. Method (100) according to any one of the preceding claims, wherein the determination (150) of the World coordinate of each vertex of each previously determined two-dimensional polygon (41, 42) and/or of each end of each previously determined roof line (51, 52) comprises extracting (151) the elevation of each World coordinate to be determined by correlating the stereoscopic images (2, 3) of each pair with one another .

7. Method (100) according to any one of the preceding claims, comprising, for each stereoscopic image (2, 3) in the pair, constructing (170) an epipolar image (20, 30) from the stereoscopic image in question, and determining (171) from the data (120) provided and associated with each pair of stereoscopic images a second stereoscopic function functional in an epipolar space associated with the epipolar images (20, 30) constructed from the stereoscopic images (2, 3) of the pair.

8. Method (100) according to the preceding claim, comprising constructing (172) a disparity map (2030) from the epipolar images (20, 30) previously constructed (170) for each pair of stereoscopic images (2, 3).

9. Method (100) according to claims 6 and 7 and where appropriate according to claim 8, wherein the extraction (151) of the elevation of each World coordinate to be determined by correlating the stereoscopic images (2, 3) of each pair with one another comprises, for each building:
• for each epipolar image (20, 30), projecting (152) onto the epipolar image in question and according to the second stereoscopic function functional in the epipolar space the two-dimensional polygon (41, 42) describing the contour (11) of the roof (10) of the building in question (1) and/or said at least one roof line (51, 52) describing a possible edge (12) of the roof (10) of the building in question (1),
• for each pair of epipolar images (20, 30), correlating (153) two by two between vertices of said two-dimensional polygon (41, 42) and/or between ends of said at least one roof line (51, 52) as projected onto the epipolar images (20, 30) of the pair, and
• for each correlation (153), determining (154) a displacement between correlated vertices and/or between said correlated ends,
• determining (155) the elevation of each vertex of said two-dimensional polygon (41, 42) and/or of each end of said at least one roof line (51, 52) as a function of the corresponding previously determined displacement.

10. Method (100) according to the preceding claim, wherein the correlation (153) between vertices of said two-dimensional polygon (41, 42) and/or between ends of said at least one roof line (51, 52) as projected onto the epipolar images (20, 30) of the pair comprises limiting in the epipolar space, and on an epipolar image (30) of the pair, a search space of each correlation to a limited set of pixel lines or points in the image around, or centred on, the pixel line or points comprising the vertex of the two-dimensional polygon (41) and/or the end of the roof line (51) to be correlated (153) with a vertex of the two-dimensional polygon (42) and/or an end of the roof line (52) as projected onto the other epipolar image (20) of the pair.

11. Method (100) according to any one of the two preceding claims and claim 8, wherein the correlation (153) between vertices of said two-dimensional polygon (41, 42) and/or between ends of said at least one roof line (51, 52), as projected onto the epipolar images (20, 30) of the pair, comprises limiting the search space in the epipolar space, and on an epipolar image (30) of the pair, by obtaining from the disparity map (2030) a first approximation of the displacement between pixels or between points corresponding with one another in the epipolar images (20, 30) of the pair.

12. Method (100) according to any one of the three preceding claims and claim 8, further comprising, after determining (154) the displacement between said vertices corresponding with one another and/or between said corresponding ends, checking (155) the previously established correlations in order to make it possible to determine, among possible multiple correspondences between vertices and/or between ends identified in one epipolar image (30) of the pair for a given vertex and/or a given end in the other epipolar image (20) of the pair, the one that minimises the difference between a disparity value of a pixel in the disparity map (2030) corresponding to said given vertex and/or said given end and the previously determined displacements corresponding to said possible multiple correspondences.

13. Method (100) according to any one of the three preceding claims, wherein the correlation (153) between vertices of the two-dimensional polygons (41 and 42) and/or between ends of the roof lines (51 and 52) as projected onto the epipolar images (20, 30) of the pair comprises the use of a uniqueness and order constraint function:
• between vertices of the two-dimensional polygon (41) as projected onto the first epipolar image (20) of the pair and vertices of the two-dimensional polygon (42) as projected onto the second epipolar image (30) of the pair, which are located substantially on the same line of pixels or points in both epipolar images (20, 30), and/or preferably then
• between ends of said at least one roof line (51) as projected onto the first epipolar image (20) of the pair and ends of said at least one roof line (52) as projected onto the second epipolar image (30) of the pair, which are located substantially on the same line of pixels or points in both epipolar images (20, 30).

14. Method (100) according to any one of the four preceding claims, further comprising, after correlating (153) between vertices of said two-dimensional polygon (41, 42) and/or between ends of said at least one roof line (51, 52) as projected onto the epipolar images (20, 30) of the pair:
• verifying that each vertex of said two-dimensional polygon (41) and/or each end of said at least one roof line (51) in a first epipolar image (20) of the pair has been correlated (153) with a vertex of said two-dimensional polygon (42) and/or an end of said at least one roof line (52) of the second epipolar image (30) in the pair,
• if a vertex of said two-dimensional polygon (41) and/or an end of said at least one roof line (51) of said first epipolar image (20) has not been correlated (153) with a vertex of said two-dimensional polygon (42) and/or an end of said at least one roof line (52) of said second epipolar image (30):
- discretising the side of said two-dimensional polygon (41) and/or said at least one roof line (51) which, on the first epipolar image (20), comprises the vertex and/or the end that has not been correlated, then
- discretising the side of said two-dimensional polygon (42) and/or of said at least one roof line (52) which, in the second epipolar image (30), corresponds to the side of said previously discretised two-dimensional polygon (41) and/or to said at least one previously discretised roof line (51), respectively,
the discretisations corresponding to one another in terms of the number of discretisation points and the distances between successive discretisation points in a direction perpendicular to the pixel lines, and
• correlating (1530) each discretisation point on the first epipolar image (20) with a discretisation point on the second epipolar image (30).

15. Method (100) according to any one of the four preceding claims, wherein the reconstruction (160) of the three-dimensional model (6) of the roof (10) of said at least one building (1) comprises, for at least one of the stereoscopic images (2, 3) or for each stereoscopic image, constructing (161) a set of at least one three-dimensional polygon (61) by projecting the previously determined World coordinates into an orthonormal reference frame.

16. Computer program product comprising instructions which, when they are performed by at least one processor, carry out the steps of the method (100) according to any one of the preceding claims.
